(19) Europäisches Patentamt
European Patent Office
Office européen des brevets

(11) **EP 1 138 921 B1**

(12) **EUROPEAN PATENT SPECIFICATION**

(45) Date of publication and mention
of the grant of the patent:
**24.05.2006 Bulletin 2006/21**

(51) Int Cl.:
***F02D 41/40*** *(2006.01)*

(21) Application number: **01107589.2**

(22) Date of filing: **27.03.2001**

(54) **Injection rate controller for internal combustion engine**

Einspritzmengenregler für eine Brennkraftmaschine

Dispositif de commande de débit d'injection d'un moteur à combustion interne

(84) Designated Contracting States:
**DE FR GB**

(30) Priority: **28.03.2000 JP 2000087883**
**04.10.2000 JP 2000304368**
**22.02.2001 JP 2001046126**

(43) Date of publication of application:
**04.10.2001 Bulletin 2001/40**

(73) Proprietor: **DENSO CORPORATION**
**Kariya-city,**
**Aichi-pref. 488-8661 (JP)**

(72) Inventors:
• **Matsumura, Toshimi**
**Kariya-city,**
**Aichi-pref., 448-8661 (JP)**
• **Ishihara, Akitaro**
**Kariya-city,**
**Aichi-pref., 448-8661 (JP)**
• **Sugiyama, Kouichi**
**Kariya-city,**
**Aichi-pref., 448-8661 (JP)**

(74) Representative: **TBK-Patent**
**Bavariaring 4-6**
**80336 München (DE)**

(56) References cited:
**EP-A- 0 704 618        DE-A- 19 930 186**
**US-A- 4 730 585**

EP 1 138 921 B1

**Description**

BACKGROUND OF THE INVENTION

1. Field of the Invention:

The present invention relates to an injection rate controller suitable for use in an internal combustion engine.

2. Description of Related Art:

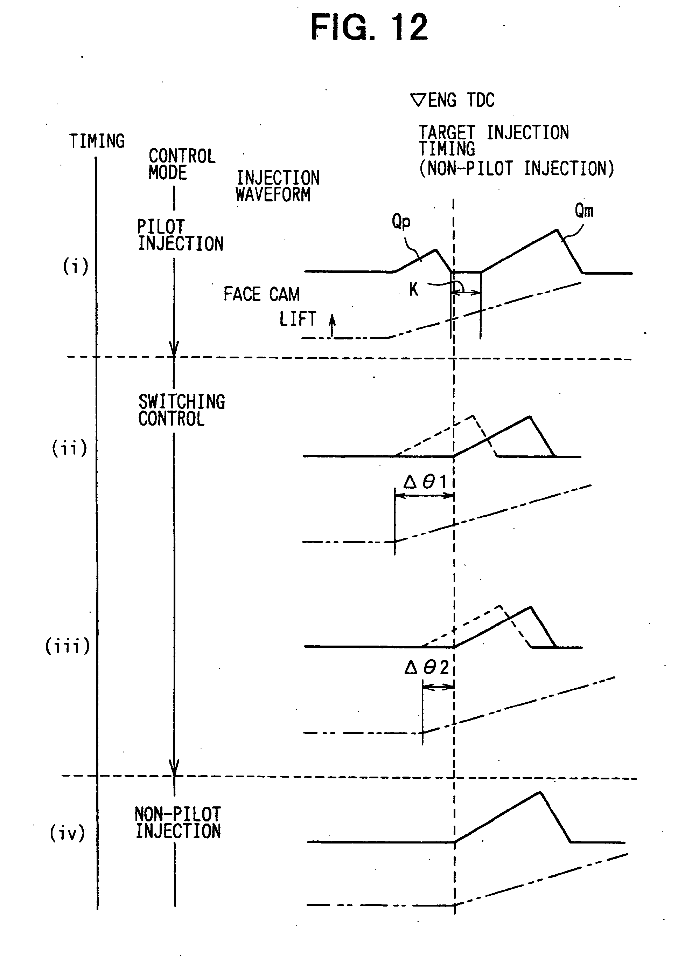

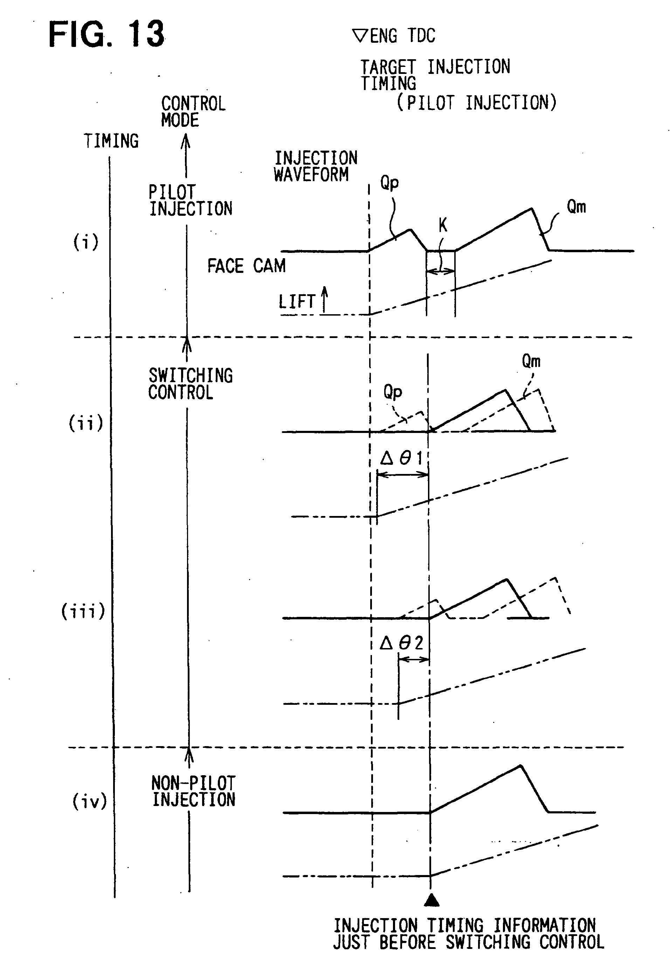

Conventionally, as shown in FIGS. 12 and 13, an injection rate controller for an internal combustion engine is known, having a mechanism of shortening delay time in ignition in main fuel injection (hereinbelow, called main injection (Qm)) by performing pilot injection (Qp) for injecting a small amount of fuel prior to the main injection, for example, to reduce combustion noise, vibration, and emission of an internal combustion engine such as diesel engine.

However, in the conventional injection rate controller for internal combustion engine, as shown in FIGS. 12 and 13, a desired injection timing (position of a timer piston), that is, the timing at which a fuel pressure feed cam built in a distributor type fuel injection pump starts to be lifted (cam lift) along a cam roller rotatably supported by a roller ring in pilot injection control in which the injection rate control is executed and the desired injection timing in non-pilot injection control in which the injection rate control is not executed, i.e., the pilot injection is not executed and only main injection is executed, are different from each other. Consequently, a proper injection amount and proper injection timing are necessary for each of the case where the injection rate control is performed and the case where the injection rate control is not performed. The injection amount and the injection timing are switched between the pilot injection control and the non-pilot injection control.

In the case of switching the injection amount and the injection timing between the pilot injection control and the non-pilot injection control, in a general distributor type fuel injection pump, at the time of changing the injection timing, the position of a timer piston for changing the position of the cam roller has to be changed. However, since an operation response of the timer piston is slow, a timer position error occurs between the actual timer position of the timer piston and a target timer position.

When the driving state of a vehicle or the operating state of an internal combustion engine shifts from a steady state to a transient state (acceleration state or deceleration state), at the switching control between the pilot injection control and the non-pilot injection control, a sharp change in combustion noise or in torque occurs due to a timer advance angle or a timer retard angle. It causes a problem such that the drivability is worsened.

This point will be described in more detail. Even when a region is switched between the pilot control region and the non-pilot control region, an injection timing of main injection introducing most of internal combustion engine torque had better be same timing for reducing noise change and torque change at the above-described region switching. Therefore, when the switching control is executed to switch from the pilot control region to the non-pilot control region, since there is no pilot injection, a timer is controlled to retard angle side (target timer position slides to retarded angle side) for equalizing the main injection timing. However, since an operation response of timer piston delays, an actual timer position is excessively advanced relative to the target timer position. Thus, at the switching control to the non-pilot control region, the main injection timing is advancedmorethanmain injection timing before the region switching.

Contrary to this, when the switching control is executed to switch from the non-pilot control region to the pilot control region, since there is a pilot injection, a timer is controlled to advanced angle side (that is, target timer position slides to advanced angle side) for equalizing the main injection timing. However, as described above, since there is an operation response delay of the timer piston, the actual timer position is excessively retarded relative to the target timer position. Thus, at the switching control to the non-pilot control region, if the pilot injection and the main injection are promptly executed, the main injection timing is retardedmore thanmain injection timing before the region switching.

Thus, in the conventional injection rate controller for internal combustion engine, a timer position is applied so that the timer position error between the actual timer position and the target timer position does not become large and the effect of the injection rate control is consciously suppressed to thereby assure drivability.

Furthermore, prior art document US 4 730 585 A discloses a diesel engine fuel injection system with a rate-of-injection control arrangement, wherein high reliability of the fuel injection is to be obtained. Fuel is pressurized in a pumping chamber of a fuel injection pump to be communicated with a variable volume chamber for the delivery stroke of the pump plunger. Fluid communication is controlled between the pumping chamber and the variable volume chamber by reciprocating a pump plunger. During the initial stage of the delivery stroke, a passage provides fluid communication between the pumping chamber and the variable volume chamber, and during this stage a rate of injection of a piezoelectric actuator is controlled to perform a pilot injection of fuel. After completion of the pilot injection in the course of the further movement of the pump plunger in a subsequent stage and under predetermined conditions a main injection is performed. For the pilot injection a rate of injection is controlled in an initial stage. In the subsequent stage for main injection there is no rate-of-injection control to relieve the piezoelectric actuator from an excessively high fuel pressure.

Moreover, prior art document EP 0 704 618 A discloses a pilot injection controller and a method of controlling pilot injection quantity which enable the quantity of fuel pilot-injected by an internal combustion engine fuel injection system of the type in which the fuel delivery stroke for pilot injection is fixed to be maintained substantially constant irrespective of engine speed by controlling pre-stroke such that the utilized portion of a cam is shifted to a lower delivery velocity region thereof with increasing engine speed. According to the principle involved the quantity of fuel pilot-injected by a fuel injection system is proportional to the actual plunger delivery velocity and the fact that since the actual delivery velocity is proportional to the product of the cam velocity constant and the cam rotational speed the actual delivery velocity can be maintained substantially constant by increasing the cam velocity constant in the low speed region and decreasing the cam velocity constant in the high speed region.

An object of the present invention is to provide an injection rate controller for an internal combustion engine, capable of suppressing deterioration in drivability caused by a change in combustion noise and a change in torque due to an injection timing error when the driving condition of a vehicle or the operating state of an internal combustion engine shifts from a steady state to an accelerating or decelerating state, that is, at the time of a change between the injection rate control region and the normal control region (at the time of the switching control).

This object is accomplished according to the present invention by an injection rate controller for an internal combustion engine as set out in the appended claims.

Accordingly, the present invention provides an injection rate controller for an internal combustion engine, capable of performing a pilot injection for injecting a small amount of fuel into a combustion chamber by opening and closing an electromagnetic spill valve in a pressure feed process, in which a plunger driven by a fuel pressure feed cam pressurizes a pressurization chamber, prior to performing a main fuel injection, wherein when a combustion state of the internal combustion engine is changed from a pilot control region with injection rate control to a non-pilot control region without injection rate control, in which only a main injection is performed, pre-stroke injection control is carried out, and wherein the pre-stroke injection control performs only main fuel injection in the pressure feed process, in which the electromagnetic spill valve is opened to spill the fuel in the pressurization chamber during a predetermined period as the plunger starts to reciprocate in a pressurizing direction to reduce an injection timing error caused by changing the combustion state.

According to the present invention, at a time of the switching control between a pilot injection control region and a non-pilot control region, the valve closing timing of the electromagnetic valve for metering is computed from the difference between the target value and the actual position of the fuel injection timing, that is, the injection timing error between the target injection timing and the actual injection timing, and the operating state of the internal combustion engine. The valve closing timing of the electromagnetic valve for metering is computed from the difference between the target value and the actual position of the fuel injection timing, that is, the injection timing error between the target injection timing and the actual injection timing, and the operating state of the internal combustion engine.

By controlling the valve closing timing and the valve opening timing of the electromagnetic valve for metering at the time of switching the region during a period since the control mode is switched between the pilot control region and the non-pilot control region until a predetermined condition is satisfied, a start timing of supplying fuel to the internal combustion engine is retarded only by an amount of the injection timing error (position difference of the timer piston) from the point at which the fuel pressure feed cam built in the fuel injection pump starts to be lifted, for executing single injection pre-stroke control. In such a manner, the use region of the fuel pressure feed cam can be changed. Consequently, the injection timing error amount between the target injecting timing and the actual injection timing, that is, an excessive advance and retard angle amount of the injection timing can be eliminated. Thus, deterioration in drivability caused by a change in combustion noise or a change in torque due to the injection timing error when the driving condition of the vehicle or the operating state of the internal combustion engine shifts from the steady state to the accelerating or decelerating state can be suppressed.

Furthermore, the injection rate controller for an internal combustion engine according to the present invention is capable of preventing a sharp change in combustion noise and in torque caused by the timer advance angle or the timer retard angle by performing pre-stroke control for changing a use region of a fuel pressure feed cam to thereby eliminate a delay in injection timing control at the time of the switching control between the pilot control region and the non-pilot control region.

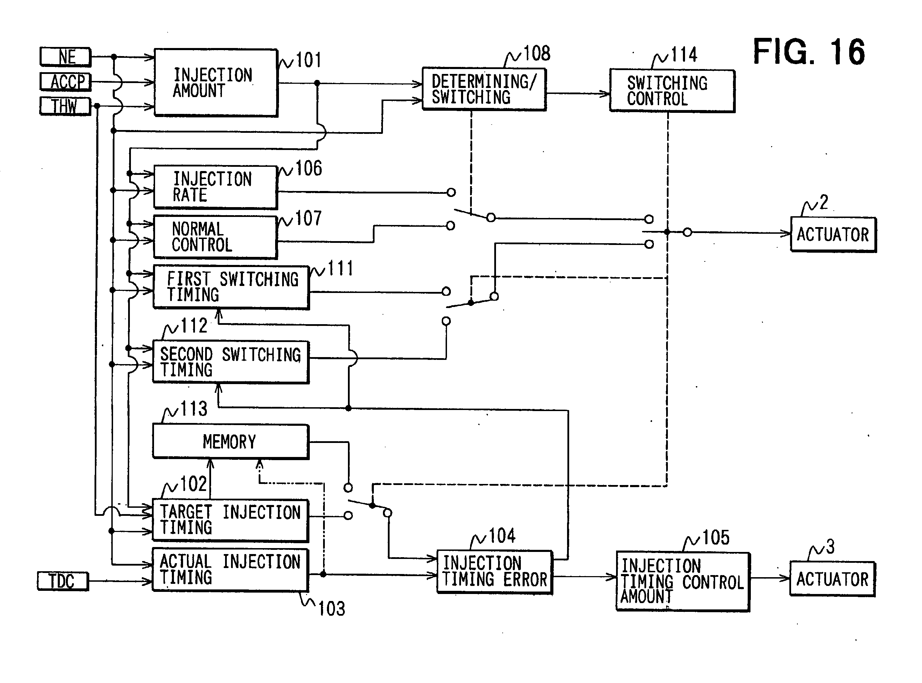

An injection rate controller for an internal combustion engine of the invention has, as shown in FIG. 16, injection amount computing means 101 for computing an injection amount from engine control parameters such as engine speed (NE), accelerator position (ACCP), and engine cooling water temperature (THW), and target injection timing calculating means 102 for calculating a target injection timing from an injection amount computation value of the injection amount computing means 101 and the engine control parameters.

The controller further includes: actual injection timing calculating means 103 for calculating an actual injection timing from engine control parameters such as engine speed (NE) and reference angle (TDC); injection timing error detecting means 104 for detecting an injection timing error by comparing the target injection timing calculated by the target injection timing calculating means 102 and the actual injection timing calculated by the actual injection timing calculating means 103; and injection timing control amount computing means 105 for computing a control amount of an injection timing control actuator 3 in accordance with the injection timing error of the injection timing error detecting means 104.

The controller further includes: injection-rate -control instruction value computing means 106 for computing an injection amount instruction value at the time of controlling the injection rate from the engine speed (NE) and the injection amount computation value of the injection amount computing means 101; normal-control instruction value computing means 107 for computing an injection amount instruction value at the time of normal control from the engine speed (NE) and the injection amount computation value of the injection amount computing means 101; and injection rate control region determining and switching means 108 for determining whether a current control mode is in a pilot control region or a non-pilot control region from the engine speed (NE) and the injection amount computation value of the injection amount computing means 101 and switching the control mode.

The controller further includes: first switching timing instruction value computing means 111 for computing a computation instruction value at the time of first switching control from the injection timing error of the injection timing error detecting means 104, the engine speed (NE), and the injection amount computation value of the injection amount computing means 101; second switching timing instruction value computing means 112 for computing a computation instruction value at the time of second switching control from the injection timing error of the injection timing error detecting means 104, the engine speed (NE), and the injection amount computation value of the injection amount computing means 101; before-switch instruction value storing means 113 for storing an instruction before switch at the time of switching a control mode; and switching control determining and executing means 114 for selecting and executing either the computation instruction value at the time of the first switching control or the computation instruction value at the time of the second switching control when an injection timing error is equal to or larger than a predetermined value after the control mode is switched.

BRIEF DESCRIPTION OF THE DRAWINGS

Additional objects and advantages of the present invention will be more readily apparent from the following detailed description of preferred embodiments thereof when taken together with the accompanying drawings in which:

FIG. 1 is an explanatory diagram showing a general configuration of an electronic controlled injector for a diesel engine;
FIG. 2 is a schematic diagram showing a rotation pulser and a rotation sensor built in a fuel injection pump;
FIG. 3 is a flowchart showing a control program of the embodiment;
FIG. 4 is a flowchart showing an example of the control program of the embodiment;
FIG. 5 is a flowchart showing the example of the control program of the embodiment;
FIG. 6 is a flowchart showing the control program of the embodiment;
FIG. 7 is a flowchart showing another example of the control program of the embodiment;
FIG. 8 is a flowchart showing another example of the control program of the embodiment;
FIG. 9A is a timing chart showing behaviors of the timer position at the time of switching control from the pilot control region to the non-pilot control region;
FIG. 9B is a timing chart showing behaviors of the timer position at the time of switching control from the non-pilot control region to the pilot control region;
FIG. 10 is a timing chart showing behaviors of target timer position, actual timer position, timer position error, actual injection timing, pre-stroke value, and combustion noise at the time of switching control from the pilot control region to the non-pilot control region;
FIG. 11 is a timing chart showing behaviors of target timer position, actual timer position, timer position error, actual injection timing, pre-stroke value, and combustion noise at the time of switching control from the non-pilot control region to the pilot control region;
FIG. 12 is a schematic diagram showing injection waveforms and cam positions at the time of switching control from the pilot control region to the non-pilot control region;
FIG. 13 is a schematic diagram showing injection waveforms and cam positions at the time of switching control from the non-pilot control region to the pilot control region;
FIG. 14 is an injection amount map showing the pilot control region and the non-pilot control region;
FIG. 15 is a flowchart showing additional another example of the control program of the embodiment, and
FIG. 16 is a block diagram showing a schematic configuration of an injection rate controller for an internal combustion engine of the present invention.

DETAILED DESCRIPTION OF PREFERRED EMBODIMENTS

(First Embodiment)

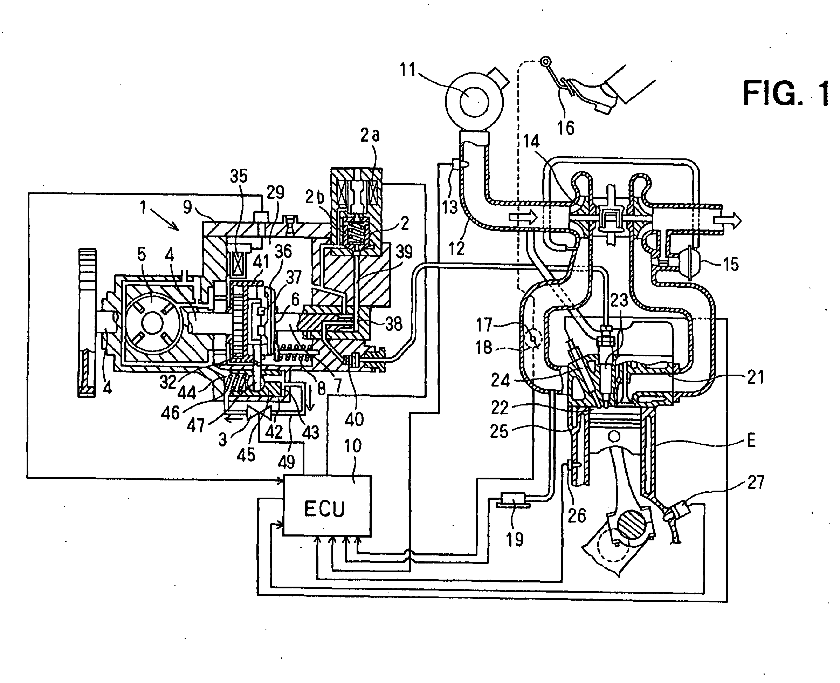

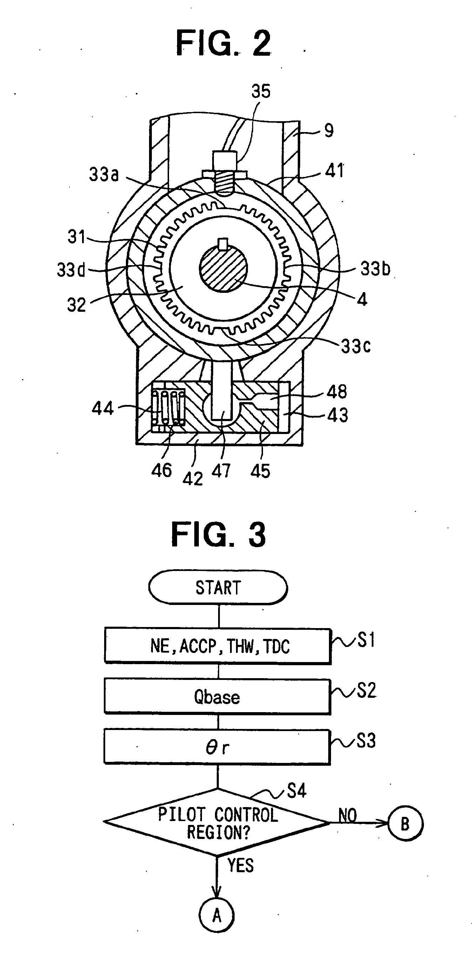

A mode for carrying out the invention will be described as an embodiment with reference to the drawings. FIG. 1 is a diagram showing a general configuration of an electronic controlled injector for a diesel engine. FIG. 2 is a diagram showing a rotation pulser and a rotation sensor built in a fuel injection pump.

The electronic controlled injector for a diesel engine of the embodiment is an injection rate controller for an internal combustion engine constructed as follows. Driving conditions (engine control parameters) of an internal combustion engine (hereinafter, simply called engine) E such as a multiple cylinder (four-cylinder in the embodiment) diesel engine, a driving state of a vehicle, and an operation amount of the driver are detected by various sensors and various switches and supplied to an electronic control unit (hereinafter, called ECU) 10, and an optimum injection amount and an optimum injection timing are computed and supplied as instruction values to an electromagnetic valve for metering (injection amount control actuator or electromagnetic spill valve (hereinafter, called SPV)) 2 and an injection timing control actuator (timing control valve, hereinafter, called TCV) 3, respectively, which are built in a distributor type fuel injection pump (hereinafter, called fuel injection pump) 1.

An intake air from an air cleaner 11 is supplied to the engine E. On the downstream side of the air cleaner 11, an intake air temperature sensor (intake air temperature detecting means) 13 for detecting temperature of intake air (intake air temperature) taken into an intake pipe 12 through the air cleaner 11 is provided. On the downstream side of the intake air temperature sensor 13, a turbocharger 14 utilizing exhaust gas energy is provided. On the downstream side of the turbocharger 14, a waste gate valve 15 for preventing excessive increase in boost pressure is set.

In a throttle body in some point of the intake pipe 12, a throttle valve 17 driven in response to a stepping operation of an accelerator pedal 16 is provided. The throttle valve 17 is opened/closed in accordance with the stepping amount of the accelerator pedal 16. The opening/closing amount of the throttle valve 17 is detected as accelerator position (ACCP) by an accelerator position sensor 18 serving as driving condition detecting means for detecting a driving condition of the engine E. On the downstream side of the throttle valve 17, a intake air pressure sensor 19 for detecting the pressure of intake air is disposed.

A cylinder head 21 of the engine E is provided with a fuel injection nozzle 23 and a glow plug 24 so that their tips are projected into the combustion chamber. In a cylinder block 25 of the engine E, a cooling water temperature sensor 26 for detecting the temperature of engine cooling water (engine cooling water temperature: THW) circulating in a water jacket, and a reference position sensor 27 for detecting a rotation reference position corresponding to the crank angle of the engine E, for example, the top dead center (TDC) position of a certain cylinder are provided.

The fuel injection pump 1 has a drive shaft 4 rotated interlockingly with the rotation of the crankshaft of the engine E, a plunger 7 driven by a cam plate 6 coupled to the drive shaft 4 via a coupling, a plunger spring 8 for pressing the plunger 7 against the cam plate 6, and an electronic controlled timer (which will be described hereinafter) disposed in the lower portion of the drawing of a pump housing 9 for housing those elements.

The drive shaft 4 is coupled to the crankshaft by a not-illustrated timing belt and is a component of a power transmitting system. A feed pump 5 (which is shown in a 90° developed state in FIG. 1) for pressurizing the fuel is coupled to the drive shaft 4. The feed pump 5 pumps up a predetermined amount of the fuel per rotation from a fuel tank (not shown) and feeds the fuel into a pump chamber 29. Consequently, the fuel feed pressure of the feed pump 5, that is, the fuel pressure in the pump chamber 29 increases in proportional to the pump rotational speed.

At the tip of the drive shaft 4, the rotation pulser 32 in which a plurality of teeth 31 are disposed every predetermined angle (for example, 5.625° corresponding to 11.25° CA) is attached. In the rotation pulser 32, as shown in FIG. 2, first through fourth lack teeth portions 33a-33d for determining a reference position (top dead center (TDC) position) of each cylinder as a reference are provided every predetermined angle (90° corresponding to 180 ° CA) so as to correspond to the cylinders of the engine E.

A rotation sensor (also called rotation speed sensor, pump rotation angle sensor, or reference angle sensor) 35, which takes the form of an electromagnetic pickup, is attached so as to face the outer peripheral face of the rotation pulser 32. The rotation sensor 35 corresponds to driving condition detecting means. Since the teeth 31 of the rotation pulser 32 come close to and apart from the rotation sensor 35, pulse rotation position signals are outputted from the rotation sensor 35 by electromagnetic induction. A microcomputer in the ECU 10 works as rotational speed detecting means for detecting the engine speed (NE) by measuring interval time of the pulse rotation position signals.

The cam plate 6 has, as shown in FIG. 1, face cams (corresponding to fuel pressure feed cams of the invention) 36 of the number equal to the number of cylinders of the engine E. When the cam plate 6 is rotated by the drive shaft 4, the cam plate 6 reciprocates only by a specified cam lift on a fixed cam roller 36. The plunger 7 connected to the cam plate 6 rotates and also reciprocates, thereby taking in the fuel and then pressure-feeding the fuel.

By the reciprocating motion of the plunger 7, the volume of a pressurization chamber 38 is increased/decreased. When the volume is increased, the fuel is taken in to the pressurization chamber 38. When the volume is decreased, the fuel is pressure fed toward a delivery valve 40. The electromagnetic valve (electromagnetic spill valve, which will be called SPV hereinbelow) 2 is communicated with the pressurization chamber 38 via a spill port 39.

The SPV 2 is an injection amount control actuator for metering the injection amount of the fuel to be injected to the combustion chamber 22 of each of cylinders of the engine E and has an electromagnetic solenoid (electromagnetic coil) 2awhich is turned on/off by the ECU 10, the valve body for opening/closing the spill port 39, a return spring 2b for returning the valve body to the initial position, and the like. The SPV 2 is closed at the time of energization and the spill port 39 is closed.

The timing of the reciprocating operation of the plunger 7 is determined by the rotation angle position of a roller ring 41 (injection timing changing means) 41. The rotation angle position of the roller ring 41 is controlled by the electronic controlled timer (shown in a 90° developed state in the diagram) built in the fuel injection pump 1. The electronic controlled timer has, as shown in FIGS. 1 and 2, a timer piston (injection timing changing means) 45 disposed so as to define a timer cylinder 42 provided integrally with the lower part of the pump housing 9 into a timer high-pressure chamber 43 and a timer low-pressure chamber 44, and a timer spring 46 for energizing the timer piston 45 in the direction of injection lag. By using a change in the fuel feeding pressure, the phase with respect to the face cam 36 for driving the drive shaft 4 and the plunger 7 is changed to thereby change the injection timing.

The timer piston 45 is slidably housed in the timer cylinder 42 and is assembled in the direction orthogonal to the drive shaft 4. An actual moving position (timer stroke) of the timer piston 45 is determined by the balance of fuel pressure (fuel pressure in the pump chamber: fuel pressure in the timer high-pressure chamber 43) of the pump chamber 29 formed in the pump housing 9 and the load of the timer spring 46. The motion of the timer piston 45 is changed so as to rotate the roller ring 41 for holding the cam roller 37 via a slide pin 47. In the timer piston 45, a fuel passage 48 for communicating the pump chamber 29 and the timer high-pressure chamber 43 is formed.

To the timer cylinder 42, a fuel introducing passage 49 for introducing the fuel in the timer high-pressure chamber 43 into the timer low-pressure chamber 44 is connected. In some midpoint of the fuel introducing passage 49, the injection timing control actuator (timing control valve which will be called TCV hereinbelow) 3 for adjusting the fuel pressure in the timer high-pressure chamber 43 by adjusting the opening angle to thereby control the injection timing is disposed. The TCV 3 has an electromagnetic solenoid (electromagnetic coil) turned on/off by the ECU 10, the valve body for opening/closing the fuel introducing passage 49, a return spring for returning the valve body to the initial position (which are not shown in the diagram), and the like.

In the controller of the engine E, since the rotation sensor 35 is attached to the roller ring 41, when the timer piston 45 is moved and the roller ring 41 rotates, the rotation sensor 35 also rotates integrally with the roller ring 41. Consequently, the relative positions in the time base between the cam angle of the face cam 3 and the pump reference signal detected by the rotation sensor 35 do not change even when the timer piston 45 moves.

Since the injection timing can be therefore detected from the pump reference signal, the on/off timing of the energization of the SPV 2 is determined on the basis of the position of each pulse, and the fuel injection amount is controlled. The positions of the pulses are recognized by detecting the first through fourth lack teeth portions 33a-33d formed in the rotation pulser 32 in correspondence with the number of cylinders.

By detecting the first through fourth lack teeth portions 33a-33d, the order of each pulse subsequently detected can be recognized. The injection timing is controlled in such a manner that an amount of the fuel in the timer high-pressure chamber 43 in the timer piston 45 on which the fuel pressure in the pump chamber 29 acts, which is released to the timer low-pressure chamber 44 via the TCV 3 is controlled to move the position of the timer piston 45, thereby rotating the roller ring 41. The TCV 3 is turned on/off by the ECU 10. When the TCV 3 is turned on, the ignition timing is set to the most retard angle side. When the TCV 3 is turned off, the ignition timing is set to the most advance side. That is, by the control of the duty ratio of the TCV 3, the feedback control of the ignition timing can be performed.

The ECU 10 corresponds to each of the region switching control means, injection amount computing means, target injection timing calculating means, and actual injection timing calculating means. The ECU 10 has therein a not-illustrated microcomputer including the functions of a central processing unit (CPU), a ROM for storing various data and the like, a RAM for temporarily storing data computed by the CPU and the like, a clock oscillator for oscillating a clock signal, and an input/output circuit. Sensor signals from various sensors, for example, an intake air temperature signal detected by the intake air temperature sensor 13, an accelerator position (ACCP) signal detected by the accelerator position sensor 18, an intake air pressure signal detected by the intake air pressure sensor 19, an engine cooling water temperature (THW) signal detected by the cooling water temperature sensor 26 and, further, a fuel temperature signal detected by a fuel temperature sensor (not shown) are A/D converted by an A/D converter, and resultant signals are supplied to the microcomputer.

A pulse-state reference position (top dead center (TDC)) signal outputted from the reference position sensor 27 and a pulse-state rotation position (pump reference) signal outputted from the rotation sensor 35 are subjected to waveform shaping by a waveform shaping circuit, and resultant signals are supplied to the microcomputer. The microcomputer computes and outputs control signals to the SPV 2, TCV 3, and the like on the basis of the input data. The control signals are sent as drive instruction signals to the electromagnetic solenoid 2a in the SPV 2 and the TCV 3 via driving circuits.

A control program which will be described hereinlater is stored in the ROM in the microcomputer. In the ROM, calculation equations or characteristic diagrams for obtaining an injection amount instruction value (Qbase) according to the sensor signals from the various sensors and electromagnetic valve instruction values at the time of the pilot injection (injection rate) control (electromagnetic valve closing instruction value SPCp for pilot injection, electromagnetic valve opening instruction value SPOp for pilot injection, electromagnetic valve closing instruction valve SPC for main injection, and electromagnetic valve opening instruction value SPO for main injection) are prestored. In the ROM, calculation equations or characteristics diagrams for obtaining electromagnetic valve instruction values (electromagnetic valve closing instruction value SPC for the main injection and electromagnetic valve opening instruction value SPO for main injection) at the time of non-pilot injection (normal) control from the engine speed (NE) and the injection amount instruction value (Qbase) are prestored. Further, in the ROM, calculation equations or characteristic diagrams (two-dimensional map) for obtaining a timer instruction value (D) according to the injection timing error ($\Delta\theta$) between the target injection timing and an actual injection timing are prestored.

An operation of the electronic controlled injector for a diesel engine of the embodiment will now be briefly described with reference to FIGS. 1 and 2.

The face cam 36 is rotated by the rotation of the drive shaft 4. In response to it, the plunger 7 rotates axially and reciprocates in the axial direction. The fuel in the pump chamber 29 is taken into the pressurization chamber 38 via the spill port 39 when the plunger 7 moves backward. When the pressure compressed as the plunger 7 moves forward reaches a predetermined pressure in the pressurization chamber 38, the fuel is discharged via the delivery valve 40 for preventing the back-flow or dribbing of the fuel and is supplied to the fuel injection nozzle 23 disposed in the engine E. In such a manner, the fuel is injected from the fuel injection nozzle 23 corresponding to each of the cylinders in the engine E into each of the combustion chambers.

Generally, in the case of controlling the injection amount of the fuel to the engine E, for example, the engine speed (NE) is detected from pulse-state signals outputted from the rotation sensor 35 attached to the distributor type fuel injection pump 1, the accelerator position (ACCP) is detected by the accelerator position sensor 18, a basic injection amount is calculated from a two-dimensional map or calculation equation on the basis of the engine speed and the accelerator position, and the injection amount instruction value (Qbase) obtained by considering not only the basic injection amount but also the engine cooling water temperature (THW) detected by the cooling water temperature sensor 26.

The SPV 2 is opened/closed in accordance with the injection amount instruction value (Qbase). In a state where the SPV 2 is closed, the fuel is pressure fed as the volume of the pressurization chamber 38 decreases. In a state where the SPV 2 is opened, even if the volume of the pressurization chamber 38 decreases, the fuel is spilled via the spill port 39, and the pressure in the pressurization chamber 38 is not increased. That is, by the SPV 2, the injection amount of the fuel to the engine E is controlled.

The fuel injection timing is determined by the point at which the plunger 7 starts to be lifted, that is, by the pressure feed starting timing. The pressure feed starting timing is the point at which the face cam 36 starts to be lifted along the cam roller 37 rotatably supported by the roller ring 41. Consequently, when the position of the cam roller 37 is changed, the injection timing can be changed. The position control of the cam roller 37 is conducted by the position control of the timer piston 45 built in the distributor type fuel injection pump 1.

In the timer of the embodiment, the timer spring 46 energizes the timer piston 45 in the direction of injection lag. When the engine speed increases, the fuel feed pressure (fuel pressure in the pump chamber 29 and fuel pressure in the timer high-pressure chamber 43) increases, and the timer piston 45 is pushed against the spring force of the timer spring 46. The roller ring 41 is therefore rotated in the direction opposite to the pump rotating direction via the slide pin 47, and the injection timing is advanced proportional to the hydraulic pressure.

The injection timing is controlled by limiting or permitting the movement to the advance angle side of the timer piston 45 by adjusting the hydraulic pressure (fuel pressure in the timer high-pressure chamber 43) acting on the timer piston 45 by the TCV 3 which is turned on/off (for example, duty ratio controlled) by the ECU 10 so that the target injection timing according to the engine control parameters and the actual injection timing coincide with each other.

A control method of an electronic controlled injector for a diesel engine of the embodiment will now be briefly described by referring to FIGS. 3-9. FIGS. 3-6 are flowcharts showing an example of a control program stored in the ROM in the microcomputer of the ECU 10. Each time the fuel is injected into the combustion chamber of each of the cylinders of the engine E, the control process is executed.

First, as shown in the flowchart of FIG. 3, the accelerator position (ACCP), engine speed (NE), engine cooling water temperature (THW), top dead center (TDC) position of a predetermined cylinder, pulse-state rotation position signal, and the like as the engine control parameters are obtained (step S1). Next, the basic injection amount (injection amount instruction value: Qbase) is computed from the accelerator position (ACCP) and the engine speed (NE) obtained in step S1 (injection amount calculating means: step S2). From the top dead center (TDC) position of the predetermined cylinder detected by the reference position sensor 27 and the pulse-state rotation position signal from the rotation sensor 35, an actual timer position (actual movement position of the timer piston 45: θr) is calculated by time/angle conversion (actual timer position calculating means: step S3).

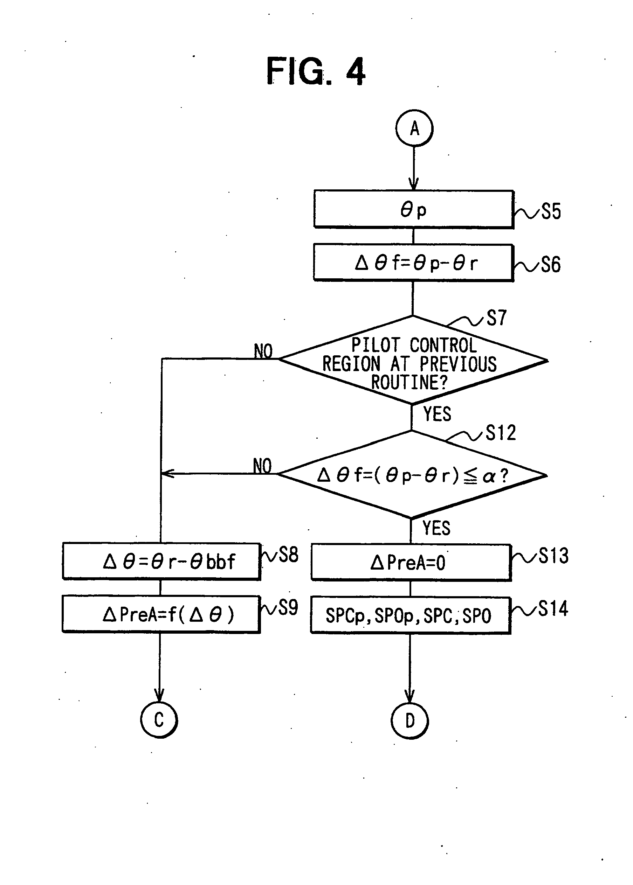

Subsequently, whether the present control region is the pilot control region for carrying out the injection rate control or the non-pilot control region in which the injection rate control is not performed is determined from the injection amount instruction value (Qbase) and the engine speed (NE) (control region determining means: step S4). When the result of the determination is YES, that is, when the present control region is the pilot control region, as shown by the flowchart of Fig. 4, the target injection timing (θp) for pilot injection (injection rate) control is calculated. To be specific, the target timer position (θp) for pilot injection control is calculated from the injection amount instruction value (Qbase) and the engine speed (NE) (first injection timing information calculating means: step S5).

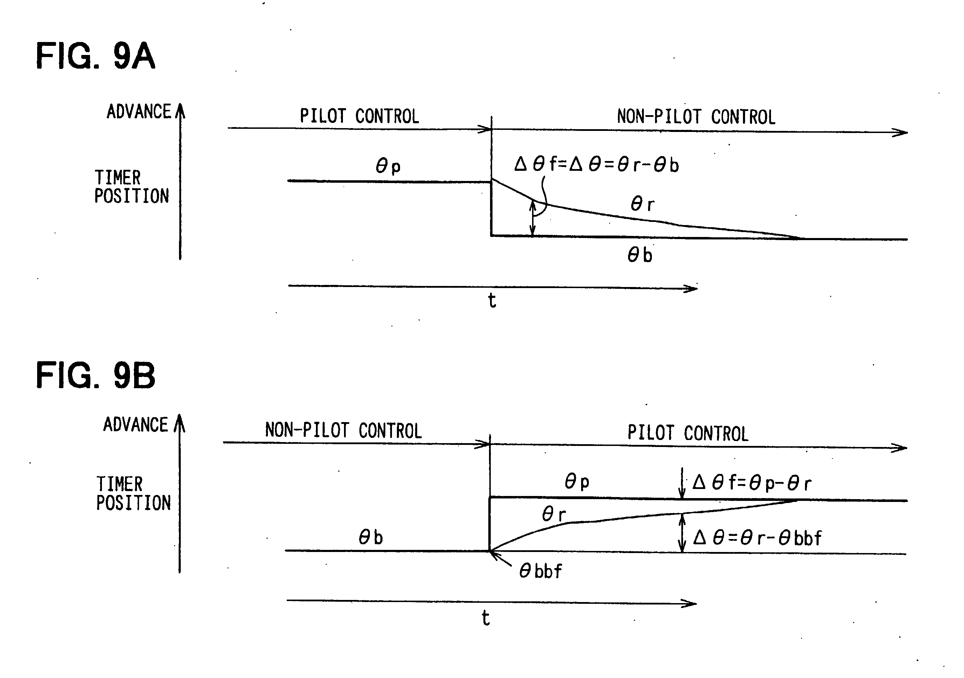

After that, the injection timing error (Δθf) is computed in accordance with the timing chart of FIG. 9B and the following arithmetic expression (1). Specifically, from the target timer position (θp) and the actual timer position (θr) calculated in steps S3 and S5, the injection timing error (Δθf) for timer feedback and for switching control completion determination is calculated (step S6).

$$\Delta\theta f = \theta p - \theta r \qquad (1)$$

Whether or not the region of last time is also the pilot control region is determined (step S7). When the result of the determination is NO, that is, when the region of last time is the non-pilot control region, to perform the switching control from the non-pilot control region to the pilot control region, pre-stroke injection control means for the first switching control in step S8 and subsequent steps is executed.

When the result of determination in step S7 is NO, according to the timing chart of FIG. 9B and the following arithmetic expression (2), the injection timing error (Δθ) for pre-stroke control is computed. To be specific, the timer position error (Δθ) for pre-stroke control between the actual timer position (θr) calculated in step S3 and the target timer position (θbbf) for non-pilot (normal) control just before the control area switch stored in step S15 whichwill be described hereinlater is calculated (first timer position error calculating means: step S8)

$$\Delta\theta = \theta r - \theta bbf \qquad (2)$$

The computation instruction value (ΔPreA) for first switching control is computed in accordance with the following equation (3). More specifically, according to the timer position error (Δθ) for pre-stroke control calculated in step S8, the computation instruction value (first pre-stroke value: ΔPreA) at the time of the first switching control (pre-stroke control) is computed (first computation instruction value computing means: step S9).

$$\Delta PreA = f(\Delta\theta) \qquad (3)$$

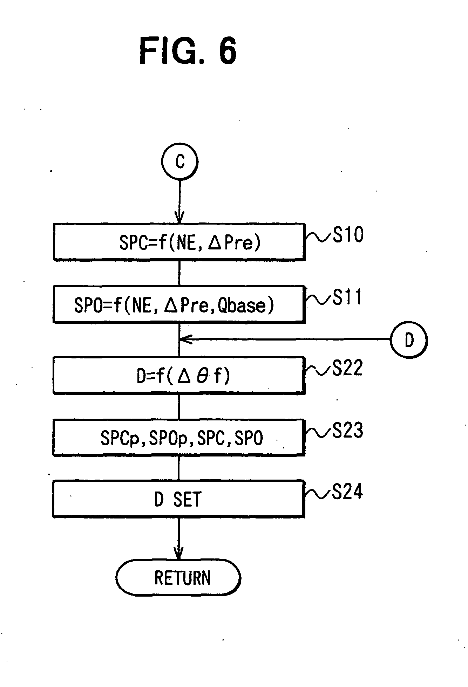

As shown in the flowchart of FIG. 6, the valve closing timing SPC of the SPV 2 for pre-stroke control is computed according to the following arithmetic expression (4). Specifically, from the first pre-stroke value (ΔPreA) calculated in step S9 or the second pre-stroke value (ΔPreB) calculated in stepS18 which will be described later and the engine speed (NE), the electromagnetic valve closing timing SPC at the time of pre-stroke (switching) control is computed (electromagnetic valve closing timing computing means: step S10).

$$SPC = f(NE, \Delta Pre) \qquad (4)$$

A valve opening timing SPO of the SPV 2 for pre-stroke control is computed by the following arithmetic expression (5). That is, the electromagnetic valve opening timing SPO at the time of the pre-stroke (switching) control is computed from the first pre-stroke value (ΔPreA) calculated in step S9 or the second pre-stroke value (ΔPreB) calculated in step S18 which will be described hereinlater, the engine speed (NE), and the injection amount instruction value Qbase (electromagnetic valve opening timing computing means: step S11).

$$SPC = f(NE, \Delta Pre, Qbase) \qquad (5)$$

When the result of the determination in step S7 is YES, by the following arithmetic expression (6), whether the injection timing error ($\Delta\theta f$) for timer feedback calculated in step S6 is equal to or lower than a predetermined value ($\alpha$) or not is determined (step S12). When the result of the determination is NO, that is, when the injection timing error ($\Delta\theta f$) for timer feedback is not equal to or lower than the predetermined value, the process in step S8 and subsequent steps is continued.

$$\Delta\theta f = (\theta p - \theta r) \leq \alpha \qquad (6)$$

When the result of the determination in step S12 is YES, that is, when the injection timing error ($\Delta\theta f$) for timer feedback is equal to or lower than the predetermined value, as a first switching control complete state, a computation instruction value (first pre-stroke value: $\Delta PreA$) at the time of the first switching control (pre-stroke control) is reset to "0" in accordance with the following arithmetic expression (7) (first switching control canceling means: step S13).

$$\Delta PreA = 0 \qquad (7)$$

Next, electromagnetic valve values (electromagnetic valve closing instruction value SPCp for pilot injection, electromagnetic valve opening instruction value SPOp for pilot, electromagnetic valve closing instruction value SPC for main injection, and electromagnetic valve opening instruction value SPO formain injection) at the time of the pilot injection (injection rate) control are calculated from the engine speed (NE) and the injection amount instruction value (Qbase) (electromagnetic valve instruction value computing means: step S14).

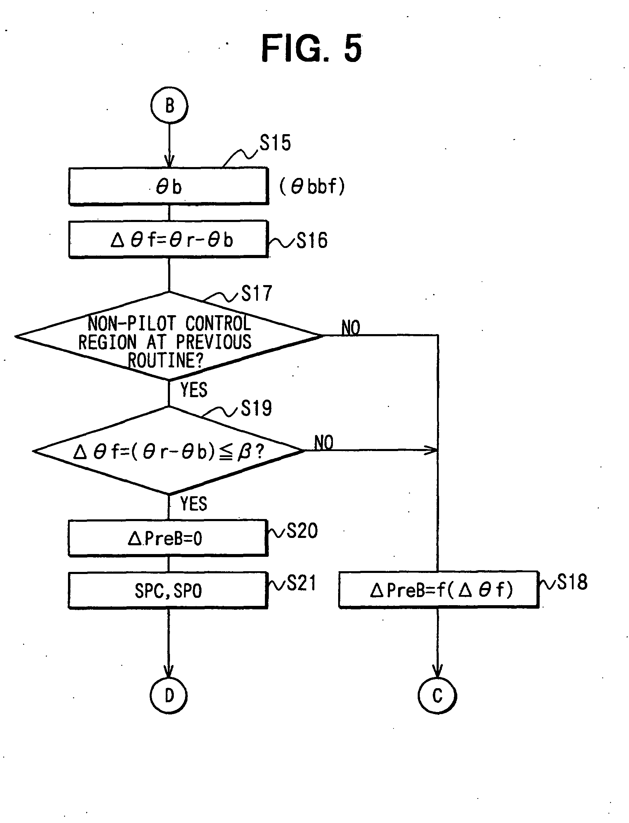

When the result of the determination in step S4 is NO, that is, when the current control region is the non-pilot control region, as shown by the flowchart of FIG. 5, a process for the non-pilot injection (normal) control is performed. That is, a target timer position ($\theta b$) for non-pilot injection control is calculated from the injection amount instruction value (Qbase) and the engine speed (NE) computed in step S2 and is stored as the injection timing information just before switching (target timer position) or the actual timer position (second injection timing information calculating and storing means: step S15).

According to the timing chart of FIG. 9A and the following arithmetic expression (8), the injection timing error ($\Delta\theta f$) is computed. That is, from the actual timer position ($\theta r$) calculated in step S3 and the target timer position ($\theta b$) calculated in step S15, the injection timing error ($\Delta\theta f$) for determining completion of the switching control for the timer feedback and for the pre-stroke control is calculated (step S16).

$$\Delta\theta f = \theta p - \theta b \qquad (8)$$

After that, whether or not the control region of last time is also the non-pilot control region is determined (step S17). When the result of the determination is NO, that is, when the region of last time is the pilot control region, in step S18 and subsequent steps, the pre-stroke injection control means for the second switching control from the pilot control region to the non-pilot control region is carried out.

The computation instruction value ($\Delta PreB$) for the second switching control is computed by the following arithmetic expression (9). Specifically, according to the injection timing error ($\Delta\theta f$) calculated in step S16, the computation instruction value (second pre-stroke value $\Delta PreB$) at the time of the second switching control (pre-stroke control) is computed (second computation instruction value computing means: step S18). After that, the program advances to the above-described steps S10 and S11, the electromagnetic valve closing timing SPC in the pre-stroke (switching) control is computed, and the electromagnetic valve opening timing SPO in the pre-stroke (switching) control is computed.

$$\Delta PreB = f(\Delta\theta f) \qquad (9)$$

When the result of the determination in step S17 is YES, that is, when the control region of last time is also the non-pilot control region, whether or not the injection timing error ($\Delta\theta f$) for timer feedback calculated in step S16 is equal to or smaller than a predetermined value ($\beta$) is calculated by the following arithmetic expression (10) (step S19). When the result of the determination is NO, that is, when the injection timing error ($\Delta\theta f$) for timer feedback is not equal to or smaller than the predetermined value, the process in step S18 and subsequent steps is continued.

$$\Delta\theta f = (\theta r - \theta b) \leq \beta \qquad (10)$$

When the result of the determination in step S19 is YES, that is, when the injection timing error ($\Delta\theta f$) for timer feedback is equal to or lower than the predetermined value, as a completion state of the second switching control, the computation instruction value (second pre-stroke value $\Delta$PreB) at the time of the second switching control (pre-stroke control) is reset to "0" by the following arithmetic expression (11) (second switching control canceling means: step S20).

$$\Delta\text{PreB} = 0 \qquad (11)$$

After that, the electromagnetic valve instruction value (electromagnetic valve closing instruction value SPC for main injection or electromagnetic valve opening instruction value SPO for main injection) at the time of the non-pilot injection (normal) control is calculated from the engine speed (NE) and the injection amount instruction value (Qbase) (electromagnetic valve instruction value computing means: step S21).

As shown in the flowchart of FIG. 6, by the following arithmetic expression (12), the timer instruction value (D) is computed from the injection timing error ($\Delta\theta f$) calculated in steps S6 and S16 (timer instruction value computing means: step S22).

$$D = f(\Delta\theta f) \qquad (12)$$

The electromagnetic valve instruction values (SPCp, SPOp, SPC, and SPO) as driving signals to the SPV 2 as injection amount changing means are set to an output stage (injection amount control means: step S23). The timer instruction value (D) as a driving signal to the TCV 3 as injection timing changing means is set to the output stage (injection timing control means: step S24).

After that, the program returns to step S1, and the above control processes are executed repeatedly.

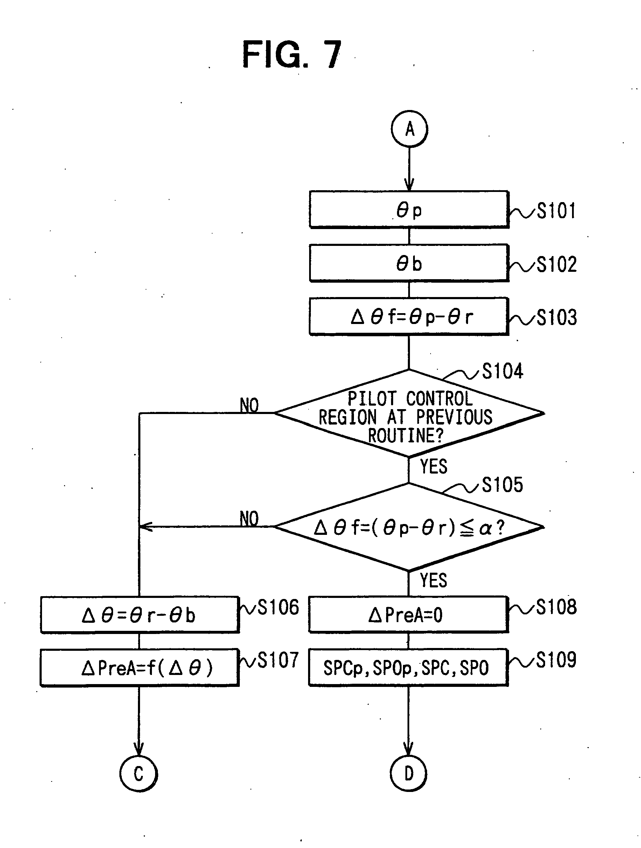

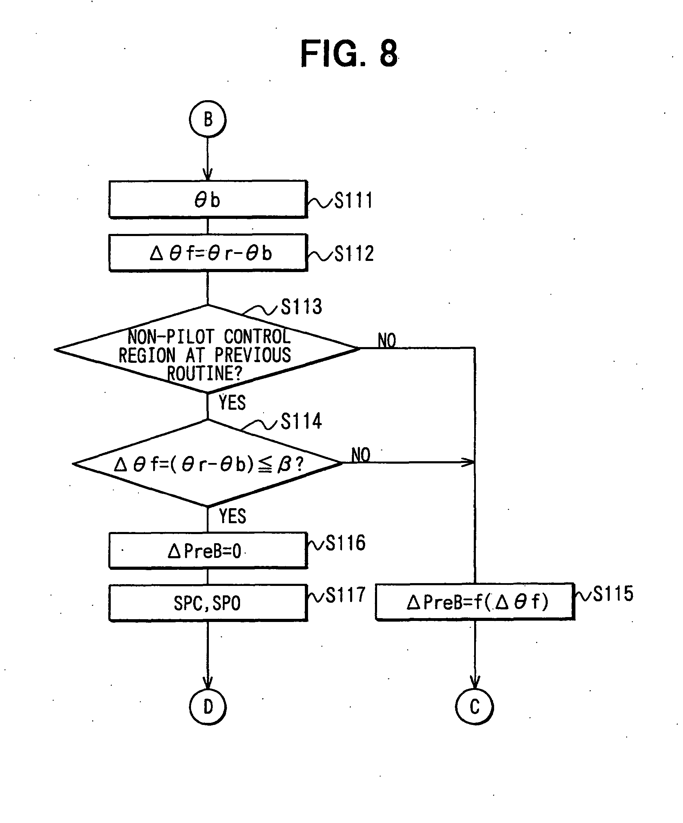

As another control method, the control method according to claim 5 will be described. FIGS. 7 and 8 are flowcharts showing another example of the control programs stored in the ROM in the microcomputer of the ECU 10.

When the result of determination in step S4 in FIG. 3 is YES, that is, when the control region is determined as the pilot control region, the control process in step S101 and subsequent steps in FIG. 7 will be performed.

First, the target timer position ($\theta p$) for pilot injection control is calculated (step S101). Simultaneously, the target timer position ($\theta b$) for non-pilot injection control used for the pre-stroke control is calculated (step S102).

The injection timing error ($\Delta\theta f$) is computed by the following arithmetic expression (13). That is, the injection timing error ($\Delta\theta f$) for the timer feedback and for determining completion of the switching control is calculated from the target timer position ($\theta p$) calculated in step S101 and the actual timer position ($\theta r$) calculated in step S3 in FIG. 3 (step S103).

$$\Delta\theta f = \theta p - \theta r \qquad (13)$$

As described above, whether the control region of last time is also the pilot control region or not is determined (step S104). When the result of the determination is YES, whether or not the first switching control has been completed after the control region became the pilot control region is determined (step S105).

When the result of the determination in step S104 is NO, that is, when the control region of last time is not the pilot control region, and the result of the determination in step S105 is NO, that is, when the first switching control has not been completed yet, the timer position error ($\Delta\theta$) is calculated by the following arithmetic expression (14) from the actual timer position ($\theta r$) calculated in step S3 and the target timer position ($\theta b$) for non-pilot injection control calculated in step S102 (step S106).

$$\Delta\theta = \theta r - \theta b \qquad (14)$$

On the basis of the timer position error ($\Delta\theta$) calculated in step S106 by the following arithmetic operation (15), the computation instruction value (first pre-stroke value $\Delta$PreA) at the time of the first switching control (pre-stroke control) is calculated (step S107). After that, the control process in step S10 and subsequent steps in FIG. 6 is executed.

$$\Delta\text{PreA} = f(\Delta\theta) \qquad (15)$$

When the result of the determination in step S105 is YES, that is, when it is determined that the first switching control has been completed, the computation instruction value (first pre-stroke value $\Delta$PreA) at the time of the first switching control (pre-stroke control) is reset to "0" by the following arithmetic expression (16) (step S108).

$$\Delta\text{PreA} = 0 \qquad (16)$$

Subsequently, from the engine speed (NE) and the injection amount instruction value (Qbase), the electromagnetic valve instruction values at the time of the pilot injection (injection rate) control (electromagnetic valve closing instruction value SPCp for pilot injection, electromagnetic valve opening instruction value SPOp for pilot injection, electromagnetic valve closing instruction value SPC for main injection, and electromagnetic value opening instruction value SPO for main injection) are calculated (step S109). After that, the control process in step S22 in FIG. 6 and subsequent steps is executed.

When the result of the determination in step S4 in FIG. 3 is NO, that is, when the current control region is determined as the non-pilot control region, the control process in step S111 and subsequent steps in FIG. 8 is performed.

The target timer position ($\theta b$) for non-pilot injection control is calculated (step S111).

After that, according to the following arithmetic expression (17), the injection timing error ($\Delta\theta f$) is computed. That is, from the actual timer position ($\theta r$) calculated in step S3 in FIG. 3 and the target timer position ($\theta b$) calculated in step S111, the injection timing error ($\Delta\theta f$) for timer feedback and for determining completion of the switching control is calculated (step S112).

$$\Delta\theta f = \theta r - \theta b \qquad (17)$$

As described above, whether or not the control region of last time is also the non-pilot control region is determined (step S113). When the result of the determination is YES, whether the second switching control after the control region became the non-pilot control region has been completed or not is determined (step S114).

When the result of the determination in step S113 is NO, that is, when the control region of last time is not the pilot control region, and the result of the determination in step S114 is NO, that is, when the second switching control has not been completed yet, the computation instruction value (second pre-stroke value $\Delta$PreB) at the time of the first switching control (pre-stroke control) is calculated by the following arithmetic expression (18) on the basis of the injection timing error ($\Delta\theta f$) calculated in step S112 (step S115). After that, the control process in step S10 and subsequent steps in FIG. 6 is executed.

$$\Delta\text{PreB} = f(\Delta\theta f) \qquad (18)$$

When the result of the determination in step S114 is YES, that is it is determined that the second switching control has been completed, the arithmetic instruction value (second pre-stroke value $\Delta$PreB) at the time of the second switching control (pre-stroke control) is reset to "0" by the following arithmetic expression (19) (step S116).

$$\Delta PreB = 0 \qquad (19)$$

Subsequently, from the engine speed (NE) and the injection amount instruction value (Qbase), the electromagnetic valve instruction values at the time of the non-pilot injection (normal) control (electromagnetic valve closing instruction value SPC for main injection and electromagnetic valve opening instruction value SPO for main injection) are calculated (step S117). After that, the control process in step S22 and subsequent steps in FIG. 6 is executed.

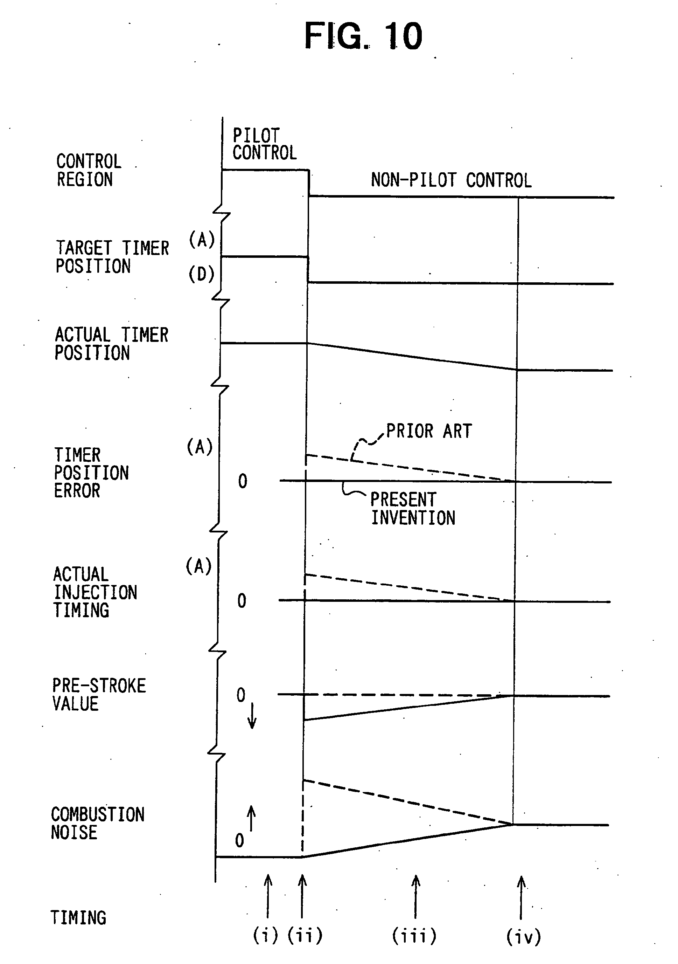

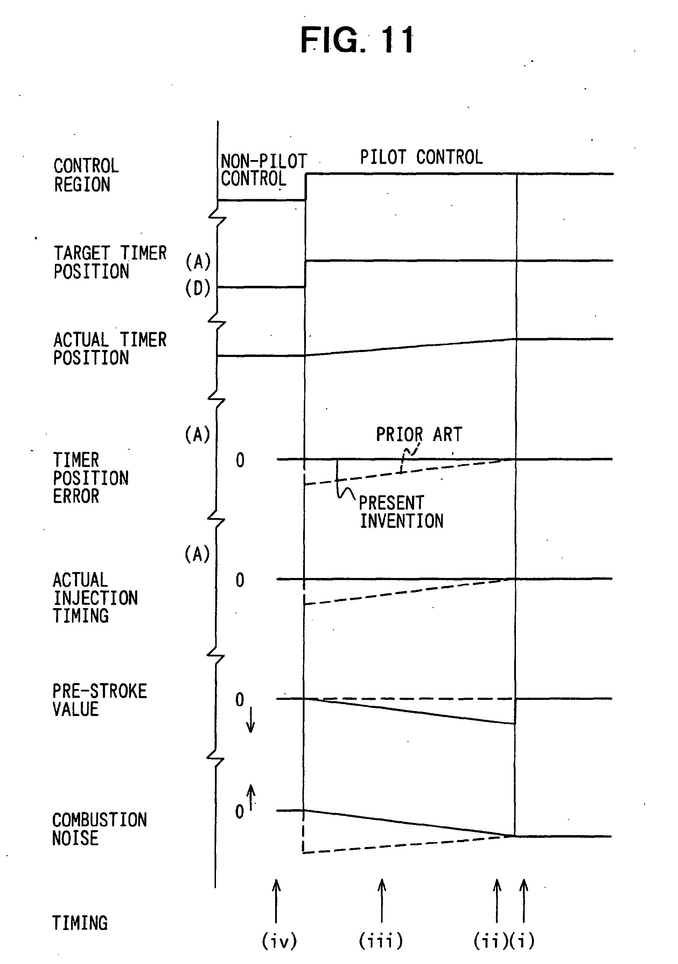

The effects of the embodiment will now be described in comparison with the inconvenience at the conventional level by referring to FIGS. 10-13. FIG. 10 is a timing chart showing behaviors at the time of the switching control from the pilot control region to the non-pilot control region. FIG. 11 is a timing chart showing behaviors at the time of switching control from the non-pilot control region to the pilot control region.

First, in the pilot injection control in which the injection rate control is performed, in order to make a spark by the pilot injection, the movement position (real timer position) of the current timer piston 45 is set on the advance angle side with respect to the non-pilot injection (normal) control executing state. As a result, when the control mode is switched from the pilot injection control to the non-pilot injection control, the target timer position is switched to the retard angle side. In the conventional injection rate control method, however, the timer position error between the target timer position and the actual timer position and the actual injection timing (main injection timing) are controlled in an advance angle state by an amount corresponding to response delay of the timer piston 45 (timer) (refer to the broken lines in FIG. 10), and combustion noise also changes abruptly.

In the non-pilot injection control in which the injection rate control is not executed, the movement position of the current timer piston 45 (actual timer position) is set to the retard angle side with respect to the pilot injection (injection rate) control. As a result, when the control mode changes from the non-pilot injection control to the pilot injection control, the target timer position is switched to the advanced side. However, in the conventional injection rate control method, since the pilot injection and the main injection are promptly executed, the timer position error between the target timer position and the actual timer position is retarded by the response delay in the timer piston 45. Thereby, the actual injection timing of the main injection is controlled in the retard angle state more than the injection timing just before the switching control (refer to the broken lines in FIGS. 11 and 13), and combustion noise also abruptly changes.

In contrast, when the invention is applied, at the time of the switching control from the pilot control region to the non-pilot control region, the excessive advance angle amount of the actual timer position is absorbed by the pre-stroke control for closing the SPV 2 at the position retarded from the cam lift start at which the face cam 36 starts to be lifted along the end cam of the cam roller 37 only by the amount of the computation instruction value (f(Δθf)) for switching control, and the main injection timing (without pilot injection) is controlled. In such a manner, the timer position error between the target timer position and the actual timer position and the advance angle state of the actual injection timing (main injection timing) are eliminated, so that an appropriate injection timing (refer to the solid line in FIG. 10) can be set.

At the time of the switching control from the non-pilot control region to the pilot control region, the excessive retard angle amount of the actual timer position and a retard angle amount relative to the injection timing just before the main injection timing switching control, which is caused by the prompt execution of the pilot injection and the main injection in the conventional control, are absorbed by the pre-stroke control for closing the SPV 2 at the position retarded from the cam lift start at which the face cam 36 starts to be lifted along the end cam of the cam roller 37 by the amount of the computation instruction value (f(Δθ)). By controlling the main injection timing by this pre-stroke control (without pilot injection), abrupt torque change and combustion noise change due to the excessive retard angle of the actual timer position relative to the target timer position when the control mode is switched are reduced, thereby improving drivability.

Therefore, a sharp change in torque and a sharp change in combustion noise due to the excessive advance angle of the actual timer position (timer excessive advance angle) at the time of the switching from the pilot injection (injection rate) control to the non-pilot injection (normal) control and the excessive regard angle of the actual timer position (timer excessive retard angle) at the time of the switching from the non-pilot injection (normal) control to the pilot injection (injection rate) control can be eliminated and the torque and the combustion noise can be smoothly shifted. Thus, deterioration in drivability at the time of switching can be suppressed.

FIG. 12 is a schematic diagram showing an injection state (injection waveform and cam position) in a predetermined time corresponding to timer response delay in the switching control from the pilot (injection rate) control region to the non-pilot (normal) control region. FIG. 13 is a schematic diagram showing an injection state (injection waveform and cam position) in a predetermined time corresponding to timer response delay in the switching control from the non-pilot (normal) control region to the pilot (injection rate) control region. Timings (i) through (iv) in FIGS. 12 and 13 denote control timings shown at the bottom in FIGS. 10 and 11. The injection state (injection waveform and cam position) at the control timings will be described hereinbelow.

First, by referring to FIG. 12, the injection state at the time of the switching control from the pilot control region (injection rate control executing state) to the non-pilot control region (state in which the injection rate control is not performed) will be described hereinbelow. The timing (i) in FIG. 12 corresponds to an injection state of the pilot injection (injection rate) control, the timing (iv) in FIG. 12 corresponds to an injection state of the non-pilot injection (normal) control, and the timings (ii) and (iii) in FIG. 12 show the injection state of the switching control (pre-stroke control) according to the invention. $\nabla$ denotes the top dead center position of a cylinder in the engine E.

In the pilot injection (injection rate) control at the timing (i) in FIG. 12, the electromagnetic valve instruction values at the time of the pilot injection control (electromagnetic valve closing instruction value SPCp for pilot injection, electromagnetic valve opening instruction value SPOp for pilot injection, electromagnetic valve closing instruction value SPC for main injection, and electromagnetic value opening instruction value SPO for main injection) are used. The cam position shown by an alternate long and two short dashes line is in an advance angle state. From the beginning of the cam lift when the face cam 36 starts to be lifted along the end cam of the cam roller 37, the SPV 2 is closed, and the pilot injection (Qp) is carried out. After injecting fuel of a predetermined pilot injection amount, the SPV 2 is opened and the injection is not performed only for a predetermined pilot interval (K). Subsequently, the SPV 2 is closed again, and the main injection (Qm) is started. After injecting the fuel of a predetermined main injection amount, the SPV 2 is opened, and the injection is finished.

When the control mode shifts from the pilot injection (injection rate) control at the timing (i) in FIG. 12 to the first switching control (pre-stroke control) at the timing (ii) in FIG. 12, at the position delayed from the cam lift start at which the face cam 36 starts to be lifted along the end cam of the cam roller 37 by $\Delta\theta1$, the SPV 2 is closed, the main injection is performed (without the pilot injection), and the pre-stroke control is performed only by the cam delay amount $\Delta\theta1$. On the other hand, after injecting the fuel of a fuel injection amount according to the pre-stroke value ($\Delta$PreA = f ($\theta$)), the SPV 2 is opened, thereby stopping the fuel injection.

Next, the timing (iii) in FIG. 13 corresponds to a state where the actual timer position (actual injection timing) as the moving position of the timer piston 45 (actual timer stroke) slightly approaches the target timer position (target injection timing) as the target position of the timer piston 45 (target timer stroke). The pre-stroke value ($\Delta$PreA = f($\theta$)) is reduced only by the amount corresponding to the movement of the actual timer position toward the target timer position, and the pre-stroke control is performed with $\Delta\theta2$. That is, the SPV 2 is closed at a position delayed by $\Delta\theta2$ from the cam lift start at which the face cam 36 starts to be lifted along the end cam of the cam roller 37 to perform the main injection (without the pilot injection), and the pre-stroke control is controlled only by the cam delay amount $\Delta\theta2$. On the other hand, the SPV 2 is opened after the fuel of a fuel injection amount corresponding to the pre-stroke value ($\Delta$PreA = f($\theta$)) is injected, thereby stopping the fuel injection.

At the timing (iv) in FIG. 12, the actual timer position becomes almost equal to the target timer position. In a state where the timer position error between the actual timer position and the target timer position is equal to or smaller than a predetermined value (for example, 1°), the non-pilot injection (normal) control which does not require the pre-stroke control (of resetting the pre-stroke value to "0") is performed. That is, the SPV 2 is closed at the cam lift start at which the face cam 36 starts to be lifted along the end cam of the cam roller 37 to perform the main injection (without the pilot injection). On the other hand, the SPV 2 is opened after the fuel of a fuel injection amount corresponding to the electromagnetic valve instruction values (electromagnetic valve closing instruction value SPC for main injection and the electromagnetic valve opening instruction value SPO for main injection) is injected, thereby stopping the fuel injection.

Referring to FIG. 13, the injection state at the time of switching control from the non-pilot control region (state where the injection rate control is not performed) to the pilot control region (injection rate control executing state) will be described hereinbelow. The timing (iv) in FIG. 13 corresponds to the injection state of the non-pilot injection (normal) control, the timing (i) in FIG. 13 corresponds to the injection state of the pilot injection (injection rate) control, and the timings (iii) and (ii) in FIG. 13 show the injection states of the switching control (pre-stroke control) according to the invention. $\nabla$ denotes the top dead center position of a cylinder in the engine E.

In the non-pilot injection (normal) control at the timing (iv) in FIG. 13, as described above, the SPV 2 is closed from the start of the cam lift, and the main injection (without the pilot injection) is performed. On the other hand, after injecting the fuel of the fuel injection amount according to the electromagnetic valve instruction value at the time of the non-pilot injection (normal) control, the SPV 2 is opened, thereby stopping the fuel injection.

When the control mode shifts from the non-pilot injection (normal) control at the timing (iv) in FIG. 13 to the second switching control (pre-stroke control) at the timing (iii) in FIG. 13, the SPV 2 is closed at the position delayed by $\Delta\theta2$ from the cam lift start at which the face cam 36 starts to be lifted along the end cam of the cam roller 37, the main injection is performed (without the pilot injection), and the pre-stroke control is performed only by the cam delay amount $\Delta\theta2$. On the other hand, by opening the SPV 2 after injecting the fuel of a fuel injection amount corresponding to the pre-stroke value ($\Delta$PreA = f($\theta$)), the fuel injection is stopped.

Subsequently, the timing (ii) in FIG. 13 corresponds to a state where the actual timer position (actual injection timing) slightly approaches the target timer position (target injection timing). The pre-stroke value ($\Delta$PreA = f($\theta$)) is reduced only by the amount corresponding to the movement of the actual timer position toward the target timer position, and the pre-stroke control is performed with $\Delta\theta2$. Specifically, the SPV 2 is closed at a position delayed by $\Delta\theta1$ from the cam lift start at which the face cam 36 starts to be lifted along the end cam of the cam roller 37 to perform the main injection (without the pilot injection), and the pre-stroke control is performed only by the cam delay amount $\Delta\theta 1$. On the other hand, the SPV 2 is opened after the fuel of a fuel injection amount corresponding to the pre-stroke value ($\Delta PreB = f(\theta)$) is injected, thereby stopping the fuel injection.

At the timing (i) in FIG. 13, the actual timer position becomes almost equal to the target timer position. In a state where the timer position error between the actual timer position and the target timer position is equal to or smaller than a predetermined value (for example, 1°), the pilot injection (injection rate) control which does not require the pre-stroke control (so that the pre-stroke value is reset to "0") is performed. That is, as described above, the control is performed with the electromagnetic valve instruction value in the pilot injection control, and the SPV 2 is closed in the beginning of the cam lift start at which the face cam 36 starts to be lifted. The SPV 2 is opened after injecting the fuel of the predetermined pilot injection amount, and the injection is not performed only in a predetermined pilot interval (K). After that, the SPV 2 is closed again, the main injection (Qm) is started, and the fuel of a predetermined main injection amount is injected. After that, the SPV 2 is opened and the injection is finished.

In the case where the control mode shifts from the non-pilot control region to the pilot control region, the target timer position is switched from the state at the timing (iv) in FIG. 13 to the state at the timing (i) in FIG. 13. When the pilot injection is carried out immediately after the switching, due to a delay in advance angle of the timer piston 45, as shown by the broken lines in FIG. 13, the main injection delays. The delay is eliminated by applying the control (pre-stroke control) to hasten the main injection to the injection position shown by the solid line in FIG. 13.

By paying attention to the point that the inconvenience in the conventional control method occurs since the SPV 2 is closed from the early stage of the cam lift along the cam roller 37 rotatably supported by the roller ring 41, the timing of closing the SPV 2 is varied in accordance with information of the timer position error between the target timer position and the actual timer position at the time of the shift between the pilot injection (injection rate) control and the non-pilot injection (normal) control, and the pre-stroke control for changing the use region of the face cam 36 is executed, thereby enabling the injection timing control of a high degree of freedom to be realized.

By performing the pre-stroke control of changing the use region of the face cam 36 at the time of the shift between the pilot injection (injection rate) control and the non-pilot injection (normal) control, an excess advance angle at the time of shift from the pilot injection control to the non-pilot injection control and an excess retard angle at the time of shift from the non-pilot injection control to the pilot injection control are prevented. Thus, the user less feels strange about the change in torque and the change in combustion noise due to the control region switch.

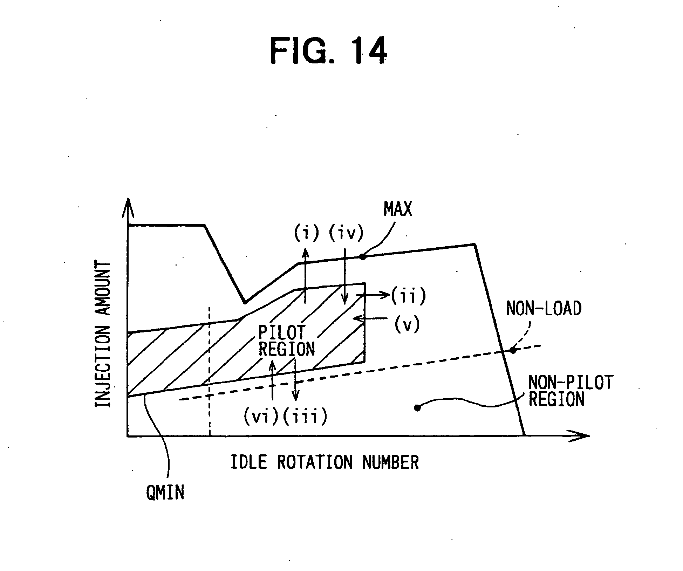

Here, at the switching control of above-described pilot control region and non-pilot control region, an advantage is introduced when the pre-stroke control is not always carried out. That is, the advantage is introduced when the pre-stroke control is prohibited at some region and the normal switching control is carried out. As shown in an injection amount map in FIG. 14, there are six scenarios that the pilot control region and the non-pilot control region are switched, as denoted by (i)-(vi).

Here, at the switching control where the non-pilot control is switched to the pilot control in a constant injection amount region as denoted by (vi), the combustion noise is ineffectively reduced. This is because when the above-described pre-stroke control is executed in (vi), the fuel amount is increased while the pre-stroke is applied, thereby increasing the combustion noise. Further, when the control mode is switched to the pilot control region, which is suitable for reducing the combustion noise, from the state, noise difference is enlarged.

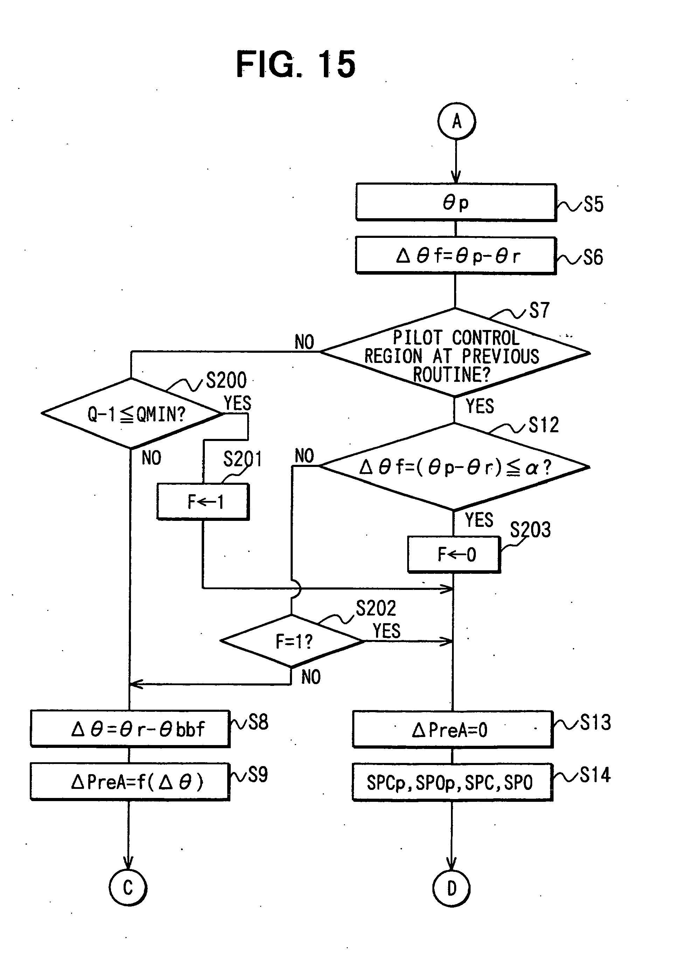

Therefore, at the switching control of (vi), the pre-stroke control is prohibited. FIG. 15 shows a flow of the pre-stroke prohibition control. Here, FIG. 15 is a flowchart in which the flow of the pre-stroke prohibition (STEP S200 - STEP S-203) is added to the above-described embodiment flowchart in FIG. 4. Hereinafter, the additional flow will be explained. Here, an explanation for remaining flow in FIG. 15 will be omitted because they have already been described.

At the switching control of (vi) shown in FIG. 14, that is, when the control mode is switched from the non-pilot control region to the pilot control region via minimum injection amount QMIN of the pilot control region, the flow is denied at STEP S7 and proceeds to STEP S200. At STEP S200, an injection amount of the previous routine, i.e., injection amount at the non-pilot control region, is determined whether it is less than the minimum injection amount QMIN. Apparently, it is affirmed and proceeds to STEP S201 where pre-stroke prohibition flag F is set "1". On the other hand, when it is denied at STEP S200, i.e., at the switching control of (iv), (v) shown in FIG. 14, it proceeds to STEP S8, S9, and executes the pre-stroke control.

After the STEP S201, the flow proceeds to STEP S13. The pre-stroke control is not executed, and the pilot-pilot injection is carried out through STEP S14 and STEPS subsequent to STEP S14. That is, pre-stroke control is prohibited.

On the other hand, at STEP S12 after it was affirmed at STEP S7, when the injection timing error $\Delta\theta f$ is not less than a predetermined value $\alpha$ (denied at STEP S12), i.e., when an operation response delay of the timer piston arises, the flow proceeds to STEP S200. STEP S202 determines whether the pre-stroke prohibition flag F is set "1" or not.

When the pre-stroke prohibition flag is determined "1", as described above, it determines as at switching control of (vi) in FIG. 14, and proceeds to STEP S13 and STEPS subsequent to S13 for prohibiting the pre-stroke control and executing the pilot injection. On the other hand, when the pre-stroke prohibition flag F is not "1", since it is at switching control of (iv), (v) shown in FIG. 14, it proceeds to STEP S8, S9 for executing the pre-stroke control. Then, at STEP S12, when the injection timing error Δθf is less than the predetermined value α (affirmed at STEP S12), i.e., when the operation response delay of the timer piston is solved, it proceeds to STEP S203 for resetting the pre-stroke prohibition flag to zero, and proceeds to STEP S13.

As explained above, at the switching control where driving state of internal combustion engine is switched from the non-pilot control region into the pilot control region via the minimum injection amount QMIN of the pilot control region, the pre-stroke control is prohibited and the pilot injection is executed, thereby reducing the combustion noise.

(Modifications)

Although the example of applying the injection rate control of the invention to the distributor type fuel injection pump 1 having the electronic controlled timer of the timer high-pressure chamber pressure control type has been described in the embodiment, the injection rate control of the invention may be used for the distributor type fuel injection pump 1 having an electronic controlled timer of a timer low-pressure chamber pressure control type.

Although an example of application of the invention has been described in the embodiment, the invention is not limited to the foregoing embodiment but can be embodied in various modes. For example, although the embodiment has been described on the basis of the fuel injection pump of the face cam feed pressure type, the control can be applied to a fuel injection pump of an inner cam pressure feed type or the like as long as the pump has an electronic controlled timer.

In the embodiment, the rotation sensor 35 on the roller ring 41 is used as the actual injection timing detecting means for detecting the actual injection timing. Obviously, the injection rate control of the invention can be executed by using a sensor for detecting the position of the timer piston 45, a lift amount of the fuel injection nozzle 23, an ion current, or the like.

Although not described in the embodiment, the pre-stroke control at the time of the switching control of switching the pilot control region and the non-pilot control region is performed by when the injection timing error (Δθf) becomes predetermined values α, β from the change in the embodiment. Alternatively, it is obvious that similar effects can be attained also when the pre-stroke control is performed in a predetermined region corresponding to the response of the timer piston 45, that is, a predetermined period (for example, one second), a predetermined number of injection times (for example, three times of main injection) or a predetermined pump rotational speed, further, a predetermined engine speed or a predetermined load.

By closing or opening an SPV (electromagnetic valve for metering) (2) at a position advanced from cam lift start only by an amount of a pre-stroke value based on a timer position error between a target timer position or an actual timer position just before the switching control and an actual timer position at the time of a shift from the non-pilot injection control to the pilot injection control, a retard angle state at the injection timing is eliminated. By closing or opening the SPV (2) at a position delayed from cam lift start only by an amount of a pre-stroke value in accordance with a timer position error between a target timer position and an actual timer position after the switching control at the time of shift from the pilot injection control to the non-pilot injection control, a retard angle state at the injection timing is eliminated.

**Claims**

1.  An injection rate controller for an internal combustion engine, capable of performing a pilot injection for injecting a small amount of fuel into a combustion chamber (22) by opening and closing an electromagnetic spill valve (2) in a pressure feed process, in which a plunger (7) driven by a fuel pressure feed cam (6) pressurizes a pressurization chamber (38), prior to performing a main fuel injection, wherein

    when a combustion state of the internal combustion engine is changed from a pilot control region with injection rate control to a non-pilot control region without injection rate control, in which only a main injection is performed, pre-stroke injection control is carried out, and wherein

    the pre-stroke injection control performs only main fuel injection in the pressure feed process, in which the electromagnetic spill valve (2) is opened to spill the fuel in the pressurization chamber (38) during a predetermined period as the plunger starts to reciprocate in a pressurizing direction to reduce an injection timing error caused by changing the combustion state.

2.  An injection rate controller for an internal combustion engine according to claim 1, wherein a pre-stroke injection control amount, at a time of change between the pilot control region and the non-pilot control region, is determined in accordance with a difference between a target value of a fuel injection timing determined at least based on a driving condition of the internal combustion engine and an actual position of the fuel injection timing.

3.  An injection rate controller for an internal combustion engine according to claim 1, wherein a period of the pre-stroke injection control, at a time of change between the pilot control region and the non-pilot control region, is a period until a difference between a target value of a fuel injection timing, which is determined based on at least a driving condition of the internal combustion engine, and an actual position of the fuel injection timing becomes equal to or smaller than a predetermined value, or a predetermined time, or a period up to an engine rotation number reaches a predetermined rotation number or up to an injection number reaches a predetermined injection number.

4. An injection rate controller for an internal combustion engine according to claim 1, wherein the pre-stroke injection control, at a time of change between the pilot control region and the non-pilot control region, is performed in a region up to a predetermined engine rotation speed or a predetermined load.

5. An injection rate controller for an internal combustion engine according to claim 1, wherein at a time of switching control from the non-pilot control region to the pilot control region, the pre-stroke control is performed in accordance with at least an injection timing error between injection timing information just before the switching control and an actual injection timing during a period from start of the switching control until a predetermined condition is satisfied.

6. An injection rate controller for an internal combustion engine according to claim 5, wherein the injection timing information just before the switching control denotes a target injection timing or a target timer position just before the switching control or an actual injection timing or an actual timer position just before the switching control, and the injection timing error denotes a timer position error between the injection timing information just before the switching control and the actual timer position after the switching control.

7. An injection rate controller for an internal combustion engine according to claim 5, wherein at a time of the switching control from the pilot control region to the non-pilot control region, the region switching control means performs the pre-stroke control in accordance with at least an injection timing error between a target injection timing after the switching control and an actual injection timing during a period from start of the switching control until a predetermined condition is satisfied.

8. An injection rate controller for an internal combustion engine according to any one of claims 1-7, wherein the region switching control means has a computing method of a computation instruction value in pre-stroke control at the time of switching control from the pilot control region to the non-pilot control region and has a computing method of a computation instruction value in pre-stroke control at the time of switching control from the non-pilot control region to the pilot control region, the methods being different from each other.

9. An injection rate controller for an internal combustion engine according to claim 1, wherein at a time of the switching control from the pilot control region to the non-pilot control region, an injection timing target value in the pilot injection control is computed and, simultaneously, an injection timing target value in the non-pilot injection control is also computed, and even when the pilot injection control is performed at the time of the switching control, pre-stroke injection control is performed in accordance with an injection timing error between an injection timing target value at the time of the non-pilot injection control and the injection timing target value.

10. An injection rate controller for an internal combustion engine according to claim 1, further comprising a pre-stroke prohibition means for prohibiting the pre-stroke injection control at a time of the switching control when a driving state of said internal combustion engine is switched to the pilot control region from the non-pilot control region while a previous injection amount is less than a minimum injection amount of the pilot control region.

11. An injection rate controller for an internal combustion engine according to claim 10, wherein when said pre-stroke prohibition means prohibits the pre-stroke injection control, the injection rate control to perform the pilot injection is executed.

12. An injection rate controller for an internal combustion engine according to claim 1, wherein the electromagnetic valve (2) is controlled to open and close in the pre-stroke control so that the main injections start at substantially the same time and supply substantially the same amount of fuel between the pilot control region and the non-pilot control region.

**Patentansprüche**

1.  Einspritzraten-Steuerungsvorrichtung für eine Brennkraftmaschine, die in der Lage ist, vor der Durchführung einer Haupteinspritzung eine Piloteinspritzung zum Einspritzen einer kleinen Brennstoffmenge in eine Brennkammer (22) durch Öffnen und Schließen eines elektromagnetischen Überströmventils (2) in einem Brennstoffzuführungsablauf durchzuführen, in welchem ein mittels eines Brennstoffdruckzuführungsnockens (6) angetriebener Kolben (7) eine Druckkammer (38) unter Druck setzt, wobei

    eine Vorhubeinspritzsteuerung durchgeführt wird, wenn ein Verbrennungszustand der Brennkraftmaschine von einem Pilotsteuerungsbereich mit einer Einspritzratensteuerung zu einem Nicht-Pilotsteuerungsbereich ohne eine Einspritzratensteuerung geändert wird, bei der lediglich eine Haupteinspritzung durchgeführt wird, und wobei

    die Vorhubeinspritzsteuerung lediglich eine Haupteinspritzung in dem Druckzuführungsablauf durchführt, bei dem das elektromagnetische Überströmventil (2) geöffnet wird zum Überströmen des Brennstoffs in die Druckkammer (38) während einer vorbestimmten Zeitdauer, wenn der Kolben seine hin- und hergehende Bewegung in einer Druckrichtung beginnt, zum Vermindern eines Einspritzzeitfehlers infolge der Änderung des Verbrennungszustands.

2.  Einspritzraten-Steuerungsvorrichtung für eine Brennkraftmaschine nach Anspruch 1, wobei eine Vorhub-Einspritzsteuerungsmenge zu einer Zeit der Änderung zwischen dem Pilotsteuerungsbereich und dem Nicht-Pilotsteuerungsbereich entsprechend einer Differenz zwischen einem Sollwert einer Brennstoffeinspritzzeit, die zumindest auf der Basis einer Antriebsbedingung der Brennkraftmaschine bestimmt wird, und einer tatsächlichen Position der Brennstoffeinspritzzeit bestimmt wird.

3.  Einspritzraten-Steuerungsvorrichtung für eine Brennkraftmaschine nach Anspruch 1, wobei eine Zeitdauer der Vorhubeinspritzsteuerung zu einer Zeit der Änderung zwischen dem Pilotsteuerungsbereich und dem Nicht-Pilotsteuerungsbereich eine Zeitdauer ist, bis eine Differenz zwischen einem Sollwert einer Brennstoffeinspritzzeit, die zumindest auf der Basis einer Antriebsbedingung der Brennkraftmaschine bestimmt wird, und einer tatsächlichen Position der Brennstoffeinspritzzeit gleich oder kleiner als ein vorbestimmter Wert wird, oder eine vorbestimmte Zeit, oder eine Zeitdauer, bis zu der eine Maschinendrehzahl eine vorbestimmte Drehzahl erreicht, oder bis eine Einspritzanzahl eine vorbestimmte Einspritzanzahl erreicht.

4.  Einspritzraten-Steuerungsvorrichtung für eine Brennkraftmaschine nach Anspruch 1, wobei die Vorhubsteuerung zu einer Zeit des Umschaltens zwischen dem Pilotsteuerungsbereich und dem Nicht-Pilotsteuerungsbereich in einem Bereich bis zu einer vorbestimmten Maschinendrehzahl oder einer vorbestimmten Belastung durchgeführt wird.

5.  Einspritzraten-Steuerungsvorrichtung für eine Brennkraftmaschine nach Anspruch 1, wobei die Vorhubsteuerung zu einer Zeit des Umschaltens der Steuerung von dem Nicht-Pilotsteuerungsbereich zu dem Pilotsteuerungsbereich in Abhängigkeit von zumindest einem Einspritzzeitfehler zwischen der Einspritzzeitinformation unmittelbar vor der Umschaltsteuerung und einer tatsächlichen Einspritzzeit während einer Zeitdauer von dem Start der Umschaltsteuerung bis zum Erfüllen einer vorbestimmten Bedingung durchgeführt wird.

6.  Einspritzraten-Steuerungsvorrichtung für eine Brennkraftmaschine nach Anspruch 5, wobei

    die Einspritzzeitinformation unmittelbar vor der Umschaltsteuerung eine Solleinspritzzeit oder eine Sollzeitgeberposition unmittelbar vor der Umschaltsteuerung, oder eine tatsächliche Einspritzzeit oder eine tatsächliche Zeitgeberposition unmittelbar vor der Umschaltsteuerung bezeichnet, und

    der Einspritzzeitfehler einen Zeitgeberpositionsfehler zwischen der Einspritzzeitinformation unmittelbar vor der Umschaltsteuerung und der tatsächlichen Zeitgeberposition nach der Umschaltsteuerung bezeichnet.

7.  Einspritzraten-Steuerungsvorrichtung für eine Brennkraftmaschine nach Anspruch 5, wobei

    zu einer Zeit der Umschaltsteuerung von dem Pilotsteuerungsbereich zu dem Nicht-Pilotsteuerungsbereich die Bereichsumschaltsteuerungseinrichtung die Vorhubsteuerung entsprechend zumindest einem Einspritzzeitfehler zwischen einer Solleinspritzzeit nach der Umschaltsteuerung und einer tatsächlichen Einspritzzeit während einer Periode von dem Start der Umschaltsteuerung bis zur Erfüllung einer vorbestimmten Bedingung durchführt.

8.  Einspritzraten-Steuerungsvorrichtung für eine Brennkraftmaschine nach einem der Ansprüche 1 bis 7, wobei die Bereichsumschaltsteuerungseinrichtung ein Berechnungsverfahren umfasst für einen Berechnungsanweisungswert in der Vorhubsteuerung zur Zeit der Umschaltsteuerung von dem Pilotsteuerungsbereich zu dem Nicht-Pilotsteuerungsbereich, und ein Berechnungsverfahren umfasst für einen Berechnungsanweisungswert in der Vorhubsteuerung zur Zeit der Umschaltsteuerung von dem Nicht-Pilotsteuerungsbereich zu dem Pilotsteuerungsbereich, wobei die Verfahren zueinander unterschiedlich sind.

9. Einspritzraten-Steuerungsvorrichtung für eine Brennkraftmaschine nach Anspruch 1, wobei zu einer Zeit des Umschaltens von dem Pilotsteuerungsbereich zu dem Nicht-Pilotsteuerungsbereich ein Einspritzzeitsollwert in der Piloteinspritzsteuerung berechnet wird, und gleichzeitig ein Einspritzzeitsollwert in der Nicht-Piloteinspritzsteuerung ebenfalls berechnet wird, und auch wenn die Piloteinspritzsteuerung zur Zeit der Umschaltsteuerung durchgeführt wird, eine Vorhubeinspritzsteuerung in Verbindung mit einem Einspritzzeitfehler zwischen einem Einspritzzeitsollwert zur Zeit der Nicht-Piloteinspritzsteuerung und dem Einspritzzeitsollwert durchgeführt wird.

10. Einspritzraten-Steuerungsvorrichtung für eine Brennkraftmaschine nach Anspruch 1, ferner mit einer Vorhubverhinderungseinrichtung zum Verhindern der Vorhubeinspritzsteuerung zu einer Zeit der Umschaltsteuerung, wenn ein Antriebszustand der Brennkraftmaschine zu dem Pilotsteuerungsbereich von dem Nicht-Pilotsteuerungsbereich umgeschaltet wird, wobei eine vorherige Einspritzmenge kleiner als eine Minimum-Einspritzmenge des Pilotsteuerungsbereichs ist.

11. Einspritzraten-Steuerungsvorrichtung für eine Brennkraftmaschine nach Anspruch 10, wobei die Einspritzratensteuerung zur Durchführung der Piloteinspritzung durchgeführt wird, wenn die Vorhubverhinderungseinrichtung die Vorhubeinspritzsteuerung verhindert.

12. Einspritzraten-Steuerungsvorrichtung für eine Brennkraftmaschine nach Anspruch 1, wobei das elektromagnetische Ventil (2) zum Öffnen und Schließen in der Vorhubsteuerung gesteuert wird, so dass die Haupteinspritzungen im Wesentlichen zur gleichen Zeit beginnen und im Wesentlichen dieselbe Brennstoffmenge zwischen dem Pilotsteuerungsbereich und dem Nicht-Pilotsteuerungsbereich zuführen.

## Revendications

1. Une unité de commande de débit d'injection pour un moteur à combustion interne, capable d'effectuer une injection pilote pour injecter une petite quantité de carburant dans une chambre de combustion (22) en ouvrant et en fermant une soupape de décharge électromagnétique (2) dans un processus d'alimentation sous pression, dans lequel un piston plongeur (7) entraîné par une came d'alimentation en carburant sous pression (6) met sous pression une chambre de mise sous pression (38), avant d'effectuer une injection de carburant principale, dans lequel lorsqu'un état de combustion du moteur à combustion interne est changé en passant d'une région de commande pilote avec une commande de débit d'injection, à une région de non-commande pilote sans commande de débit d'injection, dans laquelle seulement une injection principale est effectuée, une commande d'injection d'avant-course est accomplie, et dans lequel la commande d'injection d'avant-course effectue seulement une injection de carburant principale dans le processus d'alimentation sous pression, dans laquelle la soupape de décharge électromagnétique (2) est ouverte pour décharger le carburant vers la chambre de mise sous pression (38) pendant une période prédéterminée, lorsque le piston plongeur commence à accomplir un mouvement alternatif dans une direction de mise sous pression, pour réduire une erreur d'instant d'injection occasionnée par un changement de l'état de combustion.

2. Une unité de commande de débit d'injection pour un moteur à combustion interne selon la revendication 1, dans laquelle une valeur de commande d'injection d'avant-course, à un moment de changement entre la région de commande pilote et la région de non-commande pilote, est déterminée conformément à une différence entre une valeur cible d'un instant d'injection de carburant déterminée au moins sur la base d'une condition de marche du moteur à combustion interne, et une position réelle de l'instant d'injection de carburant.

3. Une unité de commande de débit d'injection pour un moteur à combustion interne selon la revendication 1, dans laquelle une durée de la commande d'injection d'avant-course, à un moment de changement entre la région de commande pilote et la région de non-commande pilote, est une durée jusqu'à ce qu'une différence entre une valeur cible d'un instant d'injection de carburant, qui est déterminée sur la base d'au moins une condition de marche du moteur à combustion interne, et une position réelle de l'instant d'injection de carburant, devienne égale ou inférieure à une valeur prédéterminée, ou un temps prédéterminé, ou une durée jusqu'à ce qu'un régime du moteur atteigne un régime prédéterminé, ou jusqu'à ce qu'un nombre d'injections atteigne un nombre d'injections prédéterminé.

4. Une unité de commande de débit d'injection pour un moteur à combustion interne selon la revendication 1, dans laquelle la commande d'injection d'avant-course, à un moment de changement entre la région de commande pilote et la région de non-commande pilote, est effectuée dans une région allant jusqu'à une vitesse de rotation de moteur prédéterminée ou une charge prédéterminée.

5. Une unité de commande de débit d'injection pour un moteur à combustion interne selon la revendication 1, dans laquelle à un moment de commande de changement faisant passer de la région de non-commande pilote à la région de commande pilote, la commande d'avant-course est effectuée conformément à au moins une erreur d'instant d'injection entre une information d'instant d'injection juste avant la commande de changement, et un instant d'injection réel pendant un intervalle de temps allant du début de la commande de changement jusqu'à ce qu'une condition prédéterminée soit remplie.

6. Une unité de commande de débit d'injection pour un moteur à combustion interne selon la revendication 5, dans laquelle
l'information d'instant d'injection juste avant la commande de changement désigne un instant d'injection cible ou une position cible de dispositif d'avance / retard juste avant la commande de changement, ou un instant d'injection réel ou une position réelle de dispositif d'avance /retard juste avant la commande de changement, et
l'erreur d'instant d'injection désigne une erreur de position de dispositif d'avance / retard entre l'information d'instant d'injection juste avant la commande de changement et la position réelle de dispositif d'avance / retard après la commande de changement.

7. Une unité de commande de débit d'injection pour un moteur à combustion interne selon la revendication 5, dans laquelle
à un moment de la commande de changement faisant passer de la région de commande pilote à la région de non-commande pilote, le moyen de commande de changement de région effectue la commande d'avant-course conformément à au moins une erreur d'instant d'injection entre un instant d'injection cible après la commande de changement, et un instant d'injection réel pendant un intervalle de temps allant du début de la commande de changement jusqu'à ce qu'une condition prédéterminée soit remplie.

8. Une unité de commande de débit d'injection pour un moteur à combustion interne selon l'une quelconque des revendications 1-7, dans laquelle le moyen de commande de changement de région a un procédé de calcul d'une valeur d'instruction de calcul dans la commande d'avant-course au moment de la commande de changement faisant passer de la région de commande pilote à la région de non-commande pilote, et a un procédé de calcul d'une valeur d'instruction de calcul dans la commande d'avant-course au moment de la commande de changement faisant passer de la région de non-commande pilote à la région de commande pilote, les procédés étant différents l'un de l'autre.

9. Une unité de commande de débit d'injection pour un moteur à combustion interne selon la revendication 1, dans laquelle
à un moment de la commande de changement faisant passer de la région de commande pilote à la région de non-commande pilote, une valeur cible d'instant d'injection dans la commande d'injection pilote est calculée et, simultanément, une valeur cible d'instant d'injection dans la commande d'injection non-pilote est également calculée, et même lorsque la commande d'injection pilote est effectuée au moment de la commande de changement, une commande d'injection d'avant-course est effectuée conformément à une erreur d'instant d'injection entre une valeur cible d'instant d'injection au moment de la commande d'injection non-pilote, et la valeur cible d'instant d'injection.

10. Une unité de commande de débit d'injection pour un moteur à combustion interne selon la revendication 1, comprenant en outre un moyen d'interdiction d'avant-course pour interdire la commande d'injection d'avant-course à un moment de la commande de changement, lorsqu'un état de marche du moteur à combustion interne est changé pour passer de la région de commande pilote à la région de non-commande pilote pendant qu'une quantité d'injection précédente est inférieure à une quantité d'injection minimale de la région de commande pilote.

11. Une unité de commande de débit d'injection pour un moteur à combustion interne selon la revendication 10, dans laquelle
lorsque le moyen d'interdiction d'avant-course interdit la commande d'injection d'avant-course, la commande de débit d'injection pour effectuer l'injection pilote est exécutée.

12. Une unité de commande de débit d'injection pour un moteur à combustion interne selon la revendication 1, dans laquelle la soupape de décharge électromagnétique (2) est commandée pour s'ouvrir et se fermer dans la commande d'avant-course de sorte que les injections principales commencent sensiblement au même moment et fournissent sensiblement la même quantité de carburant entre la région de commande pilote et la région de non-commande pilote.

FIG. 1

EP 1 138 921 B1

# FIG. 2

# FIG. 3

START

NE, ACCP, THW, TDC — S1

Qbase — S2

$\theta r$ — S3

PILOT CONTROL REGION? — S4

NO → B

YES

A

# FIG. 4

(A)

| | |
|---|---|
| $\theta p$ | S5 |

| | |
|---|---|
| $\Delta\theta f = \theta p - \theta r$ | S6 |

S7

PILOT CONTROL
REGION AT PREVIOUS
ROUTINE?

NO          YES

S12

$\Delta\theta f = (\theta p - \theta r) \leqq \alpha$?

NO          YES

| | |
|---|---|
| $\Delta\theta = \theta r - \theta bbf$ | S8 |

| | |
|---|---|
| $\Delta PreA = f(\Delta\theta)$ | S9 |

| | |
|---|---|
| $\Delta PreA = 0$ | S13 |

| | |
|---|---|
| SPCp, SPOp, SPC, SPO | S14 |

(C)          (D)

# FIG. 5

B

$\theta b$    $(\theta bbf)$ — S15

$\Delta\theta f=\theta r-\theta b$ — S16

S17

NON-PILOT CONTROL REGION AT PREVIOUS ROUTINE? — NO

YES

S19

$\Delta\theta f=(\theta r-\theta b)\leqq\beta$? — NO

YES

$\Delta PreB=0$ — S20

$SPC,SPO$ — S21

$\Delta PreB=f(\Delta\theta f)$ — S18

D

C

# FIG. 6

```
        ( C )
          │
          ▼
┌──────────────────────┐
│   SPC=f(NE,△Pre)     │~S10
└──────────────────────┘
          │
          ▼
┌──────────────────────┐
│ SPO=f(NE,△Pre,Qbase) │~S11
└──────────────────────┘
          │◄──────────────( D )
          ▼
┌──────────────────────┐
│     D=f(△θf)         │~S22
└──────────────────────┘
          │
          ▼
┌──────────────────────┐
│  SPCp,SPOp,SPC,SPO   │~S23
└──────────────────────┘
          │
          ▼
┌──────────────────────┐
│       D SET          │~S24
└──────────────────────┘
          │
          ▼
      ( RETURN )
```

# FIG. 7

A

| | |
|---|---|
| $\theta p$ | ~S101 |
| $\theta b$ | ~S102 |
| $\Delta \theta f = \theta p - \theta r$ | ~S103 |

S104

PILOT CONTROL REGION AT PREVIOUS ROUTINE?

NO → / YES

S105

$\Delta \theta f = (\theta p - \theta r) \leqq \alpha ?$

NO → / YES

| $\Delta \theta = \theta r - \theta b$ | ~S106 | | $\Delta PreA = 0$ | ~S108 |
|---|---|---|---|---|
| $\Delta PreA = f(\Delta \theta)$ | ~S107 | | $SPCp, SPOp, SPC, SPO$ | ~S109 |

C

D

# FIG. 8

B

$\theta b$ ⟋S111

$\Delta \theta f = \theta r - \theta b$ ⟋S112

⟋S113

NON-PILOT CONTROL REGION AT PREVIOUS ROUTINE? —— NO

YES

⟋S114

$\Delta \theta f = (\theta r - \theta b) \leqq \beta ?$ —— NO

YES

$\Delta PreB = 0$ ⟋S116

SPC, SPO ⟋S117          $\Delta PreB = f(\Delta \theta f)$ ⟋S115

D                    C

# FIG. 9A

ADVANCE

TIMER POSITION

PILOT CONTROL | NON-PILOT CONTROL

$\theta p$

$\Delta \theta f = \Delta \theta = \theta r - \theta b$

$\theta r$

$\theta b$

t

# FIG. 9B

ADVANCE

TIMER POSITION

NON-PILOT CONTROL | PILOT CONTROL

$\theta p$

$\Delta \theta f = \theta p - \theta r$

$\theta r$

$\Delta \theta = \theta r - \theta bbf$

$\theta b$

$\theta bbf$

t

EP 1 138 921 B1

# FIG. 10

# FIG. 11

# FIG. 12

# FIG. 13

∇ENG TDC

TARGET INJECTION
TIMING
    (PILOT INJECTION)

CONTROL
MODE

TIMING

INJECTION
WAVEFORM

PILOT
INJECTION

(i)

Qp

K

Qm

FACE CAM

LIFT

SWITCHING
CONTROL

(ii)

Qp

Qm

Δθ1

(iii)

Δθ2

NON-PILOT
INJECTION

(iv)

INJECTION TIMING INFORMATION
JUST BEFORE SWITCHING CONTROL

# FIG. 14

# FIG. 15

```
        (A)
         │
         ▼
    ┌─────────┐
    │   θp    │ ～S5
    └─────────┘
         │
    ┌─────────────┐
    │ Δθf=θp-θr   │ ～S6
    └─────────────┘
         │
        S7
    ◇ PILOT CONTROL
      REGION AT PREVIOUS    NO ──►
      ROUTINE?
         │ YES
```

S7: PILOT CONTROL REGION AT PREVIOUS ROUTINE?

S200: Q-1≦QMIN?

S201: F←1

S12: Δθf=(θp-θr)≦α?

S203: F←0

S202: F=1?

S8: Δθ=θr-θbbf

S9: ΔPreA=f(Δθ)

S13: ΔPreA=0

S14: SPCp,SPOp,SPC,SPO

(C)  (D)

# FIG. 16

EP 1 138 921 B1